# EUROPEAN PATENT APPLICATION

(11) **EP 4 344 268 A1**
(43) Date of publication of application: **27.03.2024**
(21) Application number: 22841286.2
(22) Date of filing: 08.07.2022
(51) Int. Cl.: H04W 4/80, H04W 8/18, H04W 8/20

(54) **COMMUNICATION METHOD AND ELECTRONIC DEVICE**

(30) Priority: 15.07.2021 CN 202110798861
(71) Applicant: Huawei Technologies Co., Ltd., Shenzhen, Guangdong 518129 (CN)
(72) Inventor: HUANG, Jinjing, Shenzhen, Guangdong 518129 (CN)
(74) Representative: Maiwald GmbH
(86) International application number: PCT/CN2022/104703
(87) International publication number: WO 2023/284650

(57) **Abstract**

Embodiments of this application provide a communication method and an electronic device. The method includes: First, a first electronic device establishes a first Wi-Fi connection to a second electronic device, where establishment of the first Wi-Fi connection is triggered by sending a probe request by the second electronic device. Then, the first electronic device receives activation information and AP information that are sent by the second electronic device. Next, the first electronic device establishes a second Wi-Fi connection to a third electronic device based on the AP information, where establishment of the second Wi-Fi connection is triggered by sending a probe request by the first electronic device. Subsequently, the first electronic device downloads profile data for an eSIM in the first electronic device based on a wireless connection between the third electronic device and an SM-DP+ server, and accesses a network by using the eSIM. Therefore, a Bluetooth chip does not need to be deployed in the first electronic device, so that device costs are reduced. In addition, default profile does not need to be preset in the eSIM, so that costs of a default profile supplier are reduced.

## Description

This application claims priority to Chinese Patent Application No. 202110798861.9, filed with the China National Intellectual Property Administration on July 15, 2021 and entitled "COMMUNICATION METHOD AND ELECTRONIC DEVICE", which is incorporated herein by reference in its entirety.

### TECHNICAL FIELD

Embodiments of this application relates to the communication field, and in particular, to a communication method and an electronic device.

### BACKGROUND

Currently, in an IoT (Internet of Things, Internet of things) device, a physical SIM card is gradually replaced by an eSIM (Embedded-SIM (Subscriber Identity Module, Subscriber Identity Module), embedded-SIM), to improve reliability, security, and a service life of the IoT device.

However, because the eSIM is integrated inside a terminal device, and there is no operator profile (profile) inside the eSIM at delivery of the terminal device, profile data needs to be downloaded for the eSIM in the terminal device, so that the terminal device can access a network by using the eSIM.

### SUMMARY

To resolve the foregoing technical problem, this application provides a communication method, a system, and an electronic device. In the method, profile data may be downloaded for an eSIM in a first electronic device through a data path of a third electronic device or a data path of a physical SIM card of the first electronic device, so that the first electronic device can access a network by using the eSIM.

According to a first aspect, an embodiment of this application provides a communication method. The method includes: First, a first electronic device establishes a first wireless fidelity Wi-Fi connection to a second electronic device, where establishment of the first Wi-Fi connection is triggered by sending, by the second electronic device, a first probe request to the first electronic device. Next, based on the first Wi-Fi connection, the first electronic device receives activation information and wireless access point AP information that are sent by the second electronic device, where the activation information includes an address of a subscription manager-data preparation SM-DP+ server. Subsequently, the first electronic device establishes a second Wi-Fi connection to a third electronic device based on the AP information, where establishment of the second Wi-Fi connection is triggered by sending, by the first electronic device, a second probe request to the third electronic device. Then, the first electronic device sends operator profile download request information to the third electronic device based on the second Wi-Fi connection, where the profile download request information includes the address of the SM-DP+ server, and the profile download request information indicates to download, from the SM-DP+ server, profile data of a built-in embedded subscriber identity module eSIM in the first electronic device. Then, based on the second Wi-Fi connection, the first electronic device receives profile data sent by the third electronic device, where the profile data is received by the third electronic device from the SM-DP+ server. Finally, based on the profile data, the first electronic device accesses a network by using the eSIM. In this way, the first electronic device can download the profile data through a data path of the third electronic device, to access the network by using the eSIM. Compared with the conventional technology in which the profile data is downloaded through a data path established by using a Bluetooth chip, in this embodiment of this application, a Bluetooth chip that is configured to download the profile data only does not need to be deployed in the first electronic device that has no Bluetooth application scenario. This reduces device costs. In addition, in this embodiment of this application, default profile (default profile) does not need to be preset in the eSIM. This reduces costs of a supplier for providing the default profile.

According to the first aspect, that the first electronic device sends a second probe request to the third electronic device includes: The first electronic device receives indication information sent by the second electronic device, where the indication information indicates the first electronic device to send a probe request. The first electronic device sends the second probe request to the third electronic device in response to the indication information.

According to any one of the first aspect or the implementations of the first aspect, that the first electronic device sends a second probe request to the third electronic device includes: The first electronic device sends the second probe request to the third electronic device in response to the received AP information.

According to any one of the first aspect or the implementations of the first aspect, the third electronic device is the second electronic device or another electronic device.

For example, the second electronic device is a mobile terminal, and the another electronic device is a router.

According to any one of the first aspect or the implementations of the first aspect, the method further includes: The first electronic device establishes a third Wi-Fi connection to a fourth electronic device.

For example, the fourth electronic device includes but is not limited to a television, a sound box, a tablet computer, and a notebook computer.

According to any one of the first aspect or the implementations of the first aspect, the first electronic device is CPE (Customer Premise Equipment, customer premise equipment).

According to a second aspect, an embodiment of this application provides a communication method. The method includes: First, a second electronic device establishes a first wireless fidelity Wi-Fi connection to a first electronic device, where establishment of the first Wi-Fi connection is triggered by sending, by the second electronic device, a first probe request to the first electronic device. Next, the second electronic device obtains activation information generated by an operator server, and sends the activation information and wireless access point AP information to the first electronic device based on the first Wi-Fi connection. The activation information includes an address of a subscription manager-data preparation SM-DP+ server. The AP information is used by the first electronic device to connect to a third electronic device, so that the first electronic device sends profile download request information to the third electronic device. The profile download request information indicates to download, from the SM-DP+ server, profile data of a built-in eSIM in the first electronic device.

According to the second aspect, the third electronic device is the second electronic device or another electronic device.

For example, the another electronic device is a router.

According to any one of the second aspect or the implementations of the second aspect, the third electronic device is the second electronic device, and the method further includes: The second electronic device establishes a second Wi-Fi connection to the first electronic device based on the AP information, where establishment of the second Wi-Fi connection is triggered by sending, by the first electronic device, a second probe request to the second electronic device. Based on the second Wi-Fi connection, the second electronic device receives the profile download request information sent by the first electronic device. The second electronic device sends the profile download request information to the SM-DP+ server based on the address of the SM-DP+ server. The second electronic device receives profile data sent by the SM-DP+ server. The second electronic device sends the profile data to the first electronic device based on the second Wi-Fi connection.

According to any one of the second aspect or the implementations of the second aspect, that the second electronic device sends a first probe request to the first electronic device includes: The second electronic device sends the first probe request to the first electronic device in response to a received first user operation.

For example, the first user operation is an operation of sliding, by a user, an on/off button in a WLAN status setting option on a WLAN setting interface.

According to any one of the second aspect or the implementations of the second aspect, that the second electronic device obtains activation information generated by an operator server includes: The second electronic device scans a graphic code on a subscription agreement in response to a received second user operation, where the subscription agreement is generated in a process of subscription between the operator server and the eSIM. The second electronic device identifies the graphic code and extracts the activation information.

For example, an AI Life application or a management application is installed in the second electronic device, and the second user operation is an operation of tapping, by a user, an activation information obtaining option on a management interface of Huawei CPE in the AI Life application or the management application.

For example, the graphic code is a quick-response code.

According to any one of the second aspect or the implementations of the second aspect, that the second electronic device obtains activation information generated by an operator server includes: The second electronic device obtains an image of a subscription agreement in response to a received third user operation, where the subscription agreement is generated in a process of subscription between the operator server and the eSIM, and the image of the subscription agreement includes an image of the activation information. The second electronic device performs text recognition on the image of the activation information, and extracts the activation information.

For example, the third user operation is an operation of tapping, by a user, an activation information obtaining option on a management interface of Huawei CPE in an AI Life application or a management application.

For example, the text recognition may be OCR (Optical Character Recognition, optical character recognition) recognition.

According to any one of the second aspect or the implementations of the second aspect, that the second electronic device obtains activation information generated by an operator server includes: The second electronic device obtains the activation information from the operator server.

For example, in response to a received subscription operation, the second electronic device sends an eSIM identity document eID (eSIM Identity Document, eSIM identity document) to the operator server, and receives the activation information returned by the operator server.

According to any one of the second aspect or the implementations of the second aspect, the sending the activation information and AP information to the first electronic device includes: The second electronic device sends the activation information and the AP information to the first electronic device in response to a received fourth user operation.

For example, the fourth user operation is an operation of tapping, by a user, an activation information sending option on a management interface of Huawei CPE in an AI Life application or a management application.

According to any one of the second aspect or the implementations of the second aspect, the sending the activation information and AP information to the first electronic device includes: In response to a received fifth user operation, the second electronic device sends the activation information to the first electronic device and displays a prompt interface, where the prompt interface is used to ask a user whether to send the AP information, and the prompt interface includes a confirmation option. The second electronic device sends the AP information to the first electronic device in response to a received operation of tapping the confirmation option by the user.

For example, the fifth user operation is an operation of tapping, by the user, an activation information sending option on a management interface of Huawei CPE in an AI Life application or a management application.

According to any one of the second aspect or the implementations of the second aspect, the sending the activation information and AP information to the first electronic device includes: In response to a received sixth user operation, the second electronic device sends the activation information to the first electronic device and displays an AP selection interface, where the AP selection interface is used by a user to select an AP connected to the first electronic device, and the AP selection interface includes a first AP option and a second AP option. In response to a received operation of tapping the first AP option by the user, the second electronic device sends, to the first electronic device, AP information used to connect to the second electronic device. In response to a received operation of tapping the second AP option by the user, the second electronic device sends, to the first electronic device, AP information used to connect to the another electronic device.

For example, the sixth user operation is an operation of tapping, by the user, an activation information sending option on a management interface of Huawei CPE in an AI Life application or a management application.

For example, the first AP option may be a mobile phone hotspot option, and the second AP option may be a router WLAN option.

According to any one of the second aspect or the implementations of the second aspect, before the second electronic device establishes a second Wi-Fi connection to the first electronic device based on the AP information, the method further includes: The second electronic device sends indication information to the first electronic device in response to a received seventh user operation, where the indication information indicates the first electronic device to send the second probe request to the second electronic device.

For example, the seventh user operation is an operation of tapping, by a user, a STA (Station, station) mode option on a management interface of Huawei CPE in an AI Life application or a management application.

According to any one of the second aspect or the implementations of the second aspect, the sending the profile download request information to the SM-DP+ server includes: sending the profile download request information to the SM-DP+ server through a cellular network.

According to any one of the second aspect or the implementations of the second aspect, the second electronic device is a mobile terminal.

The second aspect and any implementation of the second aspect respectively correspond to the first aspect and any implementation of the first aspect. For technical effects corresponding to any one of the second aspect and the implementations of the second aspect, refer to technical effects corresponding to any one of the first aspect and the implementations of the first aspect. Details are not described herein again.

According to a third aspect, an embodiment of this application provides a communication method. The method includes: First, a first electronic device establishes a first connection to a second electronic device. Next, the first electronic device receives, based on the first connection, activation information sent by the second electronic device, where the activation information includes an address of a subscription manager-data preparation SM-DP+ server. Then, based on the address of the SM-DP+ server, the first electronic device sends a profile download request to the SM-DP+ server through a cellular network of a subscriber identity module SIM card in the first electronic device, where the profile download request indicates to download, from the SM-DP+ server, profile data of a built-in eSIM in the first electronic device. Subsequently, the first electronic device receives, through the cellular network, the profile data sent by the SM-DP+ server. Then, based on the profile data, the first electronic device accesses a network by using the built-in eSIM. In this way, the first electronic device can download, from the SM-DP+ server, the profile data for the eSIM through a cellular data path of a physical SIM card, to access the network by using the eSIM. Compared with those in the first aspect and the second aspect, the first electronic device can independently download the profile data without a need to use another device (for example, a router, a mobile phone, or a tablet computer). In addition, there is no need to perform an operation on the another device or establish a connection between the first electronic device and the another device, so that efficiency of downloading the profile data can be improved. In addition, compared with the conventional technology in which the profile data is downloaded through a data path established by using a Bluetooth chip, in this embodiment of this application, a Bluetooth chip that is configured to download the profile data only does not need to be deployed in the first electronic device that has no Bluetooth application scenario. This reduces device costs. In addition, default profile does not need to be preset in the eSIM. This reduces costs of a supplier for providing the default profile.

According to the third aspect, the first electronic device includes a modem processor modem, the modem is coupled to the eSIM through a first interface, and the modem is coupled to the SIM card through a second interface.

For example, there is one modem.

According to any one of the third aspect or the implementations of the third aspect, before the first electronic device accesses, based on the profile data, a network by using the built-in eSIM, the method further includes: The first electronic device sends, by using the modem, the received profile data to the eSIM through the first interface.

According to any one of the third aspect or the implementations of the third aspect, that the first electronic device establishes a first connection to a second electronic device includes: The first electronic device establishes a Wi-Fi connection to the second electronic device.

For example, the second electronic device is a mobile terminal.

According to any one of the third aspect or the implementations of the third aspect, that the first electronic device establishes a first connection to a second electronic device includes: The first electronic device establishes a peer-to-peer P2P connection to the second electronic device.

For example, the second electronic device is a mobile terminal.

According to any one of the third aspect or the implementations of the third aspect, that the first electronic device establishes a first connection to a second electronic device includes: The first electronic device establishes a wired connection to the second electronic device.

For example, the second electronic device is a computer.

According to any one of the third aspect or the implementations of the third aspect, the first electronic device is CPE.

According to a fourth aspect, an embodiment of this application provides a communication system. The communication system includes a first electronic device and a second electronic device, and a built-in eSIM is disposed in the first electronic device. First, the second electronic device establishes a first wireless fidelity Wi-Fi connection to the first electronic device, where establishment of the first Wi-Fi connection is triggered by sending, by the second electronic device, a first probe request to the first electronic device. Then, the second electronic device obtains activation information generated by an operator server. Next, the second electronic device sends the activation information and wireless access point AP information to the first electronic device based on the first Wi-Fi connection, where the activation information includes an address of an SM-DP+ server. Then, the first electronic device establishes a second Wi-Fi connection to the second electronic device based on the AP information, where establishment of the second Wi-Fi connection is triggered by sending, by the first electronic device, a second probe request to the second electronic device. Subsequently, the first electronic device sends profile download request information to the second electronic device based on the second Wi-Fi connection, where the profile download request information includes the address of the SM-DP+ server, and the profile download request information indicates to download profile data of an eSIM from the SM-DP+ server. Next, the second electronic device sends the profile download request information to the SM-DP+ server based on the address of the SM-DP+ server. Subsequently, the second electronic device receives the profile data sent by the SM-DP+ server. Next, the second electronic device sends the profile data to the first electronic device based on the second Wi-Fi connection. Then, based on the profile data, the first electronic device accesses a network by using the eSIM.

The fourth aspect and any implementation of the fourth aspect respectively correspond to the first aspect and any implementation of the first aspect. For technical effects corresponding to any one of the fourth aspect and the implementations of the fourth aspect, refer to technical effects corresponding to any one of the first aspect and the implementations of the first aspect. Details are not described herein again.

According to a fifth aspect, an embodiment of this application further provides a communication system. The communication system includes a first electronic device, a second electronic device, and a third electronic device. A built-in eSIM is disposed in the first electronic device. First, the second electronic device establishes a first wireless fidelity Wi-Fi connection to the first electronic device, where establishment of the first Wi-Fi connection is triggered by sending, by the second electronic device, a first probe request to the first electronic device. Next, the second electronic device obtains activation information generated by an operator server. Subsequently, the second electronic device sends the activation information and wireless access point AP information to the first electronic device based on the first Wi-Fi connection, where the activation information includes an address of an SM-DP+ server, and the AP information is used to connect to the third electronic device. Then, the first electronic device establishes a second Wi-Fi connection to the third electronic device based on the AP information, where establishment of the second Wi-Fi connection is triggered by sending, by the first electronic device, a second probe request to the third electronic device. Next, the first electronic device sends profile download request information to the third electronic device based on the second Wi-Fi connection, where the profile download request information includes the address of the SM-DP+ server, and the profile download request information indicates to download profile data of an eSIM from the SM-DP+ server. Subsequently, the third electronic device sends the profile download request information to the SM-DP+ server based on the address of the SM-DP+ server. Then, the third electronic device receives profile data sent by the SM-DP+ server, and the third electronic device sends the profile data to the first electronic device based on the second Wi-Fi connection. Then, based on the profile data, the first electronic device accesses a network by using the eSIM.

The fifth aspect and any implementation of the fifth aspect respectively correspond to the first aspect and any implementation of the first aspect. For technical effects corresponding to any one of the fifth aspect and the implementations of the fifth aspect, refer to the technical effects corresponding to any one of the first aspect and the implementations of the first aspect. Details are not described herein again.

According to a sixth aspect, an embodiment of this application provides a communication system. The communication system includes a first electronic device and a second electronic device. A built-in eSIM and a built-in subscriber identity module SIM card are disposed in the first electronic device, and the SIM card accesses a cellular network. First, the first electronic device establishes a connection to the second electronic device. Next, the second electronic device obtains activation information generated by an operator server, and then sends the activation information to the first electronic device based on the connection, where the activation information includes an address of an SM-DP+ server. Then the first electronic device sends a profile download request to the SM-DP+ server through the cellular network based on the address of the SM-DP+ server. Subsequently, the first electronic device receives, through the cellular network, profile data sent by the SM-DP+ server. Next, based on the profile data, the first electronic device accesses a network by using the eSIM. In this way, the first electronic device can download, from the SM-DP+ server, the profile data for the eSIM through a cellular data path of a physical SIM card.

The sixth aspect and any implementation of the sixth aspect respectively correspond to the first aspect and any implementation of the first aspect. For technical effects corresponding to any one of the sixth aspect and the implementations of the sixth aspect, refer to the technical effects corresponding to any one of the first aspect and the implementations of the first aspect. Details are not described herein again.

According to a seventh aspect, an embodiment of this application provides a communication system. The communication system includes a first electronic device and a second electronic device, and a built-in eSIM is disposed in the first electronic device. First, the first electronic device establishes a peer-to-peer P2P connection to the second electronic device. Next, the second electronic device obtains activation information generated by an operator server, where the activation information includes an address of an SM-DP+ server. Subsequently, the second electronic device sends the activation information to the first electronic device based on the P2P connection. Then, the first electronic device sends profile download request information to the second electronic device based on the P2P connection. Next, the second electronic device sends the profile download request information to the SM-DP+ server based on the address of the SM-DP+ server. Then, the second electronic device receives profile data sent by the SM-DP+ server, and then the second electronic device sends the profile data to the first electronic device based on the P2P connection. Subsequently, based on the profile data, the first electronic device accesses a network by using the eSIM. In this way, the first electronic device establishes the P2P connection to the second electronic device in a Wi-Fi direct mode, so that the profile data can be downloaded from the SM-DP+ server based on a wireless connection (for example, a 5G connection) between the second electronic device and the network, and the first electronic device can access the network by using the eSIM. In this way, the first electronic device can download the profile data through a data path of the second electronic device, to access the network by using the eSIM. Compared with the conventional technology in which the profile data is downloaded through a data path established by using a Bluetooth chip, in this embodiment of this application, a Bluetooth chip that is configured to download the profile data only does not need to be deployed in the first electronic device that has no Bluetooth application scenario. This reduces device costs. In addition, default profile does not need to be preset in the eSIM. This reduces costs of a supplier for providing the default profile. Compared with those in the first aspect and the second aspect, neither the first electronic device nor the second electronic device in the seventh aspect needs to perform mode switching. This reduces complexity of user operations, improves user experience, and can improve efficiency of downloading the profile data by the first electronic device.

According to the seventh aspect, the second electronic device scans a graphic code on a subscription agreement in response to a received first user operation, where the subscription agreement is generated in a process of subscription between the operator server and the eSIM. The second electronic device identifies the graphic code and extracts the activation information.

For example, the graphic code is a quick-response code.

For example, the first user operation is an operation of tapping, by a user, an activation information obtaining option on a management interface of Huawei CPE in an AI Life application or a management application.

According to any one of the seventh aspect or the implementations of the seventh aspect, the second electronic device obtains an image of a subscription agreement in response to a received second user operation, where the subscription agreement is generated in a process of subscription between the operator server and the eSIM, and the image of the subscription agreement includes an image of the activation information. The second electronic device performs text recognition on the image of the activation information, and extracts the activation information.

For example, the second user operation is an operation of tapping, by a user, an activation information obtaining option on a management interface of Huawei CPE in an AI Life application or a management application.

For example, the text recognition may be OCR recognition.

For example, the second electronic device displays an activation information input interface in response to a received third user operation, where the activation information input interface is used to input the activation information. The second electronic device obtains the activation information input by a user on the activation information interface.

For example, the third user operation is an operation of tapping, by a user, an activation information obtaining option on a management interface of Huawei CPE in an AI Life application or a management application.

According to any one of the seventh aspect or the implementations of the seventh aspect, the second electronic device sends the profile download request information to the SM-DP+ server through a cellular network.

According to any one of the seventh aspect or the implementations of the seventh aspect, the communication system further includes a third electronic device, and the third electronic device accesses the first electronic device.

For example, the third electronic device includes but is not limited to a television, a sound box, a tablet computer, and a notebook computer.

According to any one of the seventh aspect or the implementations of the seventh aspect, the first electronic device is CPE, and the second electronic device is a mobile terminal.

According to an eighth aspect, an embodiment of this application provides a communication method, applied to a communication system. The communication system includes a first electronic device and a second electronic device, and a built-in eSIM is disposed in the first electronic device. The method includes: First, the first electronic device establishes a P2P connection to the second electronic device. Next, based on the P2P connection, the first electronic device receives activation information sent by the second electronic device, where the activation information includes an address of an SM-DP+ server. Then, the first electronic device sends profile download request information to the second electronic device based on the P2P connection, to indicate the second electronic device to download profile data of the eSIM from the SM-DP+ server, and send the profile data to the first electronic device. Next, based on the P2P connection, the first electronic device receives the profile data sent by the second electronic device. Subsequently, based on the profile data, the first electronic device accesses a network by using the eSIM.

According to the eighth aspect, the communication system further includes a third electronic device. The method further includes: The first electronic device establishes a Wi-Fi connection to the third electronic device.

According to any one of the eighth aspect or the implementations of the eighth aspect, the first electronic device is CPE.

The eighth aspect and any implementation of the eighth aspect respectively correspond to the seventh aspect and any implementation of the seventh aspect. For technical effects corresponding to any one of the eighth aspect and the implementations of the eighth aspect, refer to technical effects corresponding to any one of the seventh aspect and the implementations of the seventh aspect. Details are not described herein again.

According to a ninth aspect, an embodiment of this application provides a communication system. The communication system includes a first electronic device, a second electronic device, and a third electronic device. A built-in eSIM is disposed in the first electronic device. The second electronic device exchanges data with the third electronic device based on a Wi-Fi connection. First, the first electronic device establishes a P2P connection to the second electronic device. Next, the second electronic device obtains activation information generated by an operator server, where the activation information includes an address of an SM-DP+ server. Subsequently, the second electronic device sends the activation information to the first electronic device based on the P2P connection. Subsequently, the first electronic device sends profile download request information to the second electronic device based on the P2P connection. Then, the second electronic device sends the profile download request information to the third electronic device based on the Wi-Fi connection. Next, the third electronic device sends the profile download request information to the SM-DP+ server based on the address of the SM-DP+ server. Subsequently, the third electronic device receives profile data sent by the SM-DP+ server, and the third electronic device sends the profile data to the second electronic device based on the Wi-Fi connection. Next, the second electronic device sends the profile data to the first electronic device based on the P2P connection. Subsequently, based on the profile data, the first electronic device accesses a network by using the eSIM. In this way, the first electronic device establishes the P2P connection to the second electronic device in a Wi-Fi direct mode, so that the profile data can be downloaded from the SM-DP+ server based on a Wi-Fi connection between the second electronic device and a router and a wireless connection between the router and the SM-DP+ server, and the first electronic device can access the network by using the eSIM. In this way, the first electronic device can download the profile data through a data path between the second electronic device and the third electronic device, to access the network by using the eSIM. Compared with the conventional technology in which the profile data is downloaded through a data path established by using a Bluetooth chip, in this embodiment of this application, a Bluetooth chip that is configured to download the profile data only does not need to be deployed in the first electronic device that has no Bluetooth application scenario. This reduces device costs. In addition, default profile does not need to be preset in the eSIM. This reduces costs of a supplier for providing the default profile. Compared with those in the first aspect and the third aspect, neither the first electronic device nor the second electronic device in the ninth aspect needs to perform mode switching. This reduces complexity of user operations, improves user experience, and can improve efficiency of downloading the profile data by the first electronic device. In addition, compared with the first aspect and the fifth aspect, in the ninth aspect, traffic of the second electronic device can be reduced.

According to the ninth aspect, the second electronic device scans a graphic code on a subscription agreement in response to a received first user operation, where the subscription agreement is generated in a process of subscription between the operator server and the eSIM. The second electronic device identifies the graphic code and extracts the activation information.

For example, an AI Life application or a management application is installed in the second electronic device, and the first user operation is an operation of tapping, by a user, an activation information obtaining option on a management interface of Huawei CPE in the AI Life application or the management application.

For example, the graphic code is a quick-response code.

According to any one of the ninth aspect or the implementations of the ninth aspect, the second electronic device obtains an image of a subscription agreement in response to a received second user operation, where the subscription agreement is generated in a process of subscription between the operator server and the eSIM, and the image of the subscription agreement includes an image of the activation information. The second electronic device performs text recognition on the image of the activation information, and extracts the activation information.

For example, the second user operation is an operation of tapping, by a user, an activation information obtaining option on a management interface of Huawei CPE in an AI Life application or a management application.

For example, the text recognition may be OCR recognition.

For example, the second electronic device displays an activation information input interface in response to a received third user operation, where the activation information input interface is used to input the activation information. The second electronic device obtains the activation information input by a user on the activation information interface.

For example, the third user operation is an operation of tapping, by a user, an activation information obtaining option on a management interface of Huawei CPE in an AI Life application or a management application.

For example, the second electronic device obtains the activation information from the operator server.

For example, in response to a received subscription operation, the second electronic device sends an eSIM identity document eID to the operator server, and receives the activation information returned by the operator server.

According to any one of the ninth aspect or the implementations of the ninth aspect, the communication system further includes a fourth electronic device, and the fourth electronic device accesses the first electronic device.

According to any one of the ninth aspect or the implementations of the ninth aspect, the first electronic device is CPE, the second electronic device is a mobile terminal, and the third electronic device is a router.

According to a tenth aspect, an embodiment of this application provides a communication method, applied to a communication system. The communication system includes a first electronic device, a second electronic device, and a third electronic device. A built-in eSIM is disposed in the first electronic device. The second electronic device exchanges data with the third electronic device based on a Wi-Fi connection. The method includes: First, the first electronic device establishes a P2P connection to the second electronic device. Next, based on the P2P connection, the first electronic device receives activation information sent by the second electronic device, where the activation information includes an address of an SM-DP+ server. Then, the first electronic device sends profile download request information to the second electronic device based on the P2P connection. Next, based on the P2P connection, the first electronic device receives profile data sent by the second electronic device, where the profile data is received by the third electronic device from the SM-DP+ server and sent by the third electronic device to the second electronic device. Subsequently, based on the profile data, the first electronic device accesses a network by using the eSIM.

According to any one of the tenth aspect or the implementations of the tenth aspect, the communication system further includes the third electronic device. The method further includes: The first electronic device establishes a Wi-Fi connection to the third electronic device.

According to any one of the tenth aspect or the implementations of the tenth aspect, the first electronic device is CPE.

The tenth aspect and any implementation of the tenth aspect respectively correspond to the seventh aspect and any implementation of the seventh aspect. For technical effects corresponding to any one of the tenth aspect and the implementations of the tenth aspect, refer to technical effects corresponding to any one of the seventh aspect and the implementations of the seventh aspect. Details are not described herein again.

According to an eleventh aspect, an embodiment of this application provides an electronic device. The electronic device includes a memory and a processor. The memory is coupled to the processor. The memory stores program instructions. When the program instructions are executed by the processor, the electronic device is enabled to perform the communication method performed by the first electronic device in any one of the first aspect or the possible implementations of the first aspect, or perform the communication method performed by the first electronic device in any one of the third aspect or the possible implementations of the third aspect.

The eleventh aspect and any implementation of the eleventh aspect respectively correspond to the first aspect and any implementation of the first aspect, or respectively correspond to the third aspect and any implementation of the third aspect. For technical effects corresponding to any one of the eleventh aspect and the implementations of the eleventh aspect, refer to technical effects corresponding to any one of the first aspect and the implementations of the first aspect, or refer to technical effects corresponding to any one of the third aspect and the implementations of the third aspect.

According to a twelfth aspect, an embodiment of this application provides an electronic device. The electronic device includes a memory and a processor. The memory is coupled to the processor. The memory stores program instructions. When the program instructions are executed by the processor, the electronic device is enabled to perform the communication method performed by the second electronic device in any one of the second aspect or the possible implementations of the second aspect.

The twelfth aspect and any implementation of the twelfth aspect respectively correspond to the second aspect and any implementation of the second aspect. For technical effects corresponding to any one of the twelfth aspect and the implementations of the twelfth aspect, refer to technical effects corresponding to any one of the second aspect and the implementations of the second aspect.

According to a thirteenth aspect, an embodiment of this application provides a chip. The chip includes one or more interface circuits and one or more processors. The interface circuit is configured to: receive a signal from a memory of an electronic device, and send the signal to the processor. The signal includes computer instructions stored in the memory. When the processor executes the computer instructions, the electronic device is enabled to perform the communication method performed by the first electronic device in any one of the first aspect or the possible implementations of the first aspect, or perform the communication method performed by the first electronic device in any one of the third aspect or the possible implementations of the third aspect.

The thirteenth aspect and any implementation of the thirteenth aspect respectively correspond to the first aspect and any implementation of the first aspect, or respectively correspond to the third aspect and any implementation of the third aspect. For technical effects corresponding to any one of the thirteenth aspect and the implementations of the thirteenth aspect, refer to technical effects corresponding to any one of the first aspect and the implementations of the first aspect, or refer to technical effects corresponding to any one of the third aspect and the implementations of the third aspect.

According to a fourteenth aspect, an embodiment of this application provides a chip. The chip includes one or more interface circuits and one or more processors. The interface circuit is configured to: receive a signal from a memory of an electronic device, and send the signal to the processor. The signal includes computer instructions stored in the memory. When the processor executes the computer instructions, the electronic device is enabled to perform the communication method performed by the second electronic device in any one of the second aspect or the possible implementations of the second aspect.

The fourteenth aspect and any implementation of the fourteenth aspect respectively correspond to the second aspect and any implementation of the second aspect. For technical effects corresponding to any one of the fourteenth aspect and the implementations of the fourteenth aspect, refer to technical effects corresponding to any one of the second aspect and the implementations of the second aspect.

### BRIEF DESCRIPTION OF DRAWINGS

FIG. 1a is a schematic diagram of an example of a hardware structure of an electronic device;
FIG. 1b is a schematic diagram of an example of a software structure of an electronic device;
FIG. 2 is a schematic diagram of an example of a hardware structure of an IoT device;
FIG. 3 is a schematic diagram of an example of an application scenario;
FIG. 4 is a schematic diagram of an example of a subscription process;
FIG. 5a is a schematic diagram of an example of device pairing;
FIG. 5b is a schematic diagram of an example of a communication process;
FIG. 6(1) to FIG. 6(4) are a schematic diagram of an example of a user interface;
FIG. 7 is a schematic diagram of an example of a user interface;
FIG. 8(1) and FIG. 8(2) are a schematic diagram of an example of a user interface;
FIG. 9 is a schematic diagram of an example of data exchange;
FIG. 10a is a schematic diagram of an example of device pairing;
FIG. 10b is a schematic diagram of an example of a communication process;
FIG. 11 is a schematic diagram of an example of a data exchange process;
FIG. 12 is a schematic diagram of an example of an application scenario;
FIG. 13 is a schematic diagram of an example of an application scenario;
FIG. 14a is a schematic diagram of an example of device pairing;
FIG. 14b is a schematic diagram of an example of a communication process;
FIG. 15 is a schematic diagram of an example of a data exchange process;
FIG. 16a is a schematic diagram of an example of device pairing;
FIG. 16b is a schematic diagram of an example of a communication process;
FIG. 17 is a schematic diagram of an example of a data exchange process;
FIG. 18 is a schematic diagram of an example of a data exchange process;
FIG. 19 is a schematic diagram of an example of a hardware structure of an IoT device;
FIG. 20 is a schematic diagram of an example of an application scenario;
FIG. 21 is a schematic diagram of an example of data exchange;
FIG. 22 is a schematic diagram of an example of a data exchange process; and
FIG. 23 is a schematic diagram of an example of an application scenario.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used to distinguish between different target objects, but are not used to describe a particular order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example" or "for example" is intended to present a related concept in a specific manner.

In descriptions of embodiments of this application, unless otherwise stated, "a plurality of" means two or more than two. For example, a plurality of processing units means two or more processing units; and a plurality of systems mean two or more systems.

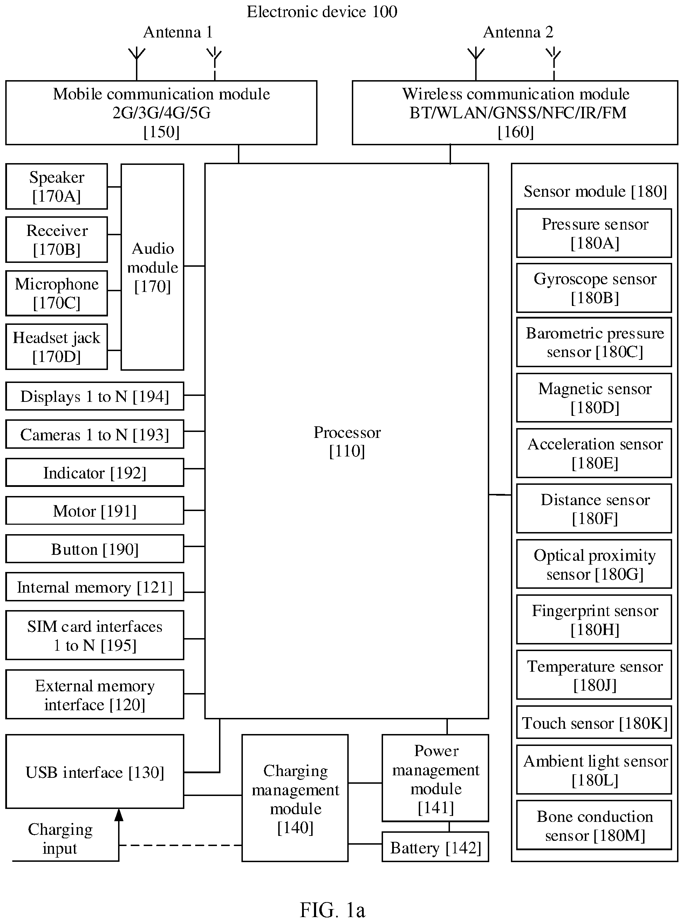

FIG. 1a is a schematic diagram of a structure of an electronic device 100. It should be understood that the electronic device 100 shown in FIG. 1a is merely an example of an electronic device, and the electronic device 100 may have more or fewer components than those shown in FIG. 1a, may combine two or more components, or may have different component configurations. Components shown in FIG. 1a may be implemented by hardware, software, or a combination of hardware and software that includes one or more signal processing and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

For example, the subscriber identity module card interface 195 may access a physical SIM card.

For example, the subscriber identity module card interface 195 may be an eSIM.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to exchange data between the electronic device 100 and a peripheral device, or may be configured to connect to a headset for playing audio through the headset. The interface may be further configured to connect to another electronic device like an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input by using a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GNSS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The external memory interface 120 may be configured to connect to an external storage card, for example, a micro-SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) created when the electronic device 100 is used, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

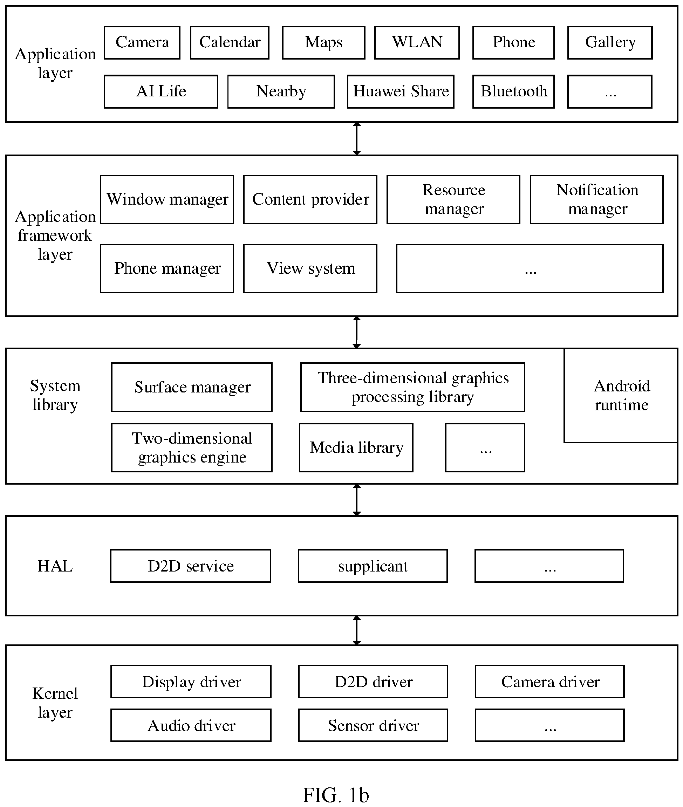

FIG. 1b is a block diagram of a software structure of the electronic device 100 according to this embodiment of this application.

In a layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 1b, the application package may include applications such as Camera, Gallery, Calendar, Phone, Navigation, WLAN, Bluetooth, Music, Video, Huawei Share, Wireless Projection, and Nearby (Nearby).

The application framework layer provides an application programming interface (application programming interface, API) and a programming framework for an application at the application layer. The application framework layer includes some predefined functions.

As shown in FIG. 1b, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, dialed and answered calls, browsing history, a bookmark, a phone book, and the like.

The view system includes a visual control, for example, a control for displaying text or a control for displaying a picture. The view system may be configured to construct an application. A display interface may include one or more views. For example, a display interface including a messages notification control may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on the background, or a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language, and a kernel library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playing and recording of a plurality of common audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

A hardware abstraction layer (Hardware Abstraction Layer, HAL) is a layer between hardware and software. The HAL includes a D2D (Device to Device, a direct device connection) service, supplicant (authentication service), and the like. Optionally, the D2D service may also be referred to as a Wi-Fi direct connection service, and is used to manage and maintain a communication link between devices. The supplicant manages a D2D interface, a Wi-Fi interface, and a key agreement function. The HAL is the foundation of the Android^{®}TM system. An ultimate functionality of the Android^{®}TM system is implemented through the HAL.

The kernel layer is a layer between hardware and software. The kernel layer includes at least a display driver, a camera driver, an audio driver, a sensor driver, a D2D driver, and the like.

It may be understood that components or modules that are included in the system framework layer, the system library and runtime layer, the HAL layer, and the kernel layer that are shown in FIG. 1b do not constitute a specific limitation on the electronic device 100. In some other embodiments of this application, the electronic device 100 may include more or fewer components than those shown in the figure, or some components may be combined, or some components may be split, or different component arrangements may be used.

For example, the electronic device 100 in FIG. 1a may be an IoT device or a terminal device. This is not limited in embodiments of this application.

For example, the terminal device may include a mobile terminal like a mobile phone or a tablet computer. This is not limited in embodiments of this application. In this embodiment of the present invention, the mobile phone is used as an example for description.

For example, there may be a plurality of types of IoT devices, such as a wearable device, a vehicle-mounted device, and CPE (Customer Premise Equipment, customer premise equipment). This is not limited in embodiments of this application. In this embodiment of the present invention, the CPE is used as an example for description.

For example, the CPE has a cellular function and a Wi-Fi function, may convert a cellular signal into a Wi-Fi signal, and is used as a router.

In a possible implementation, a built-in eSIM is disposed in the CPE, and a SIM card interface for inserting a physical SIM card is not disposed.

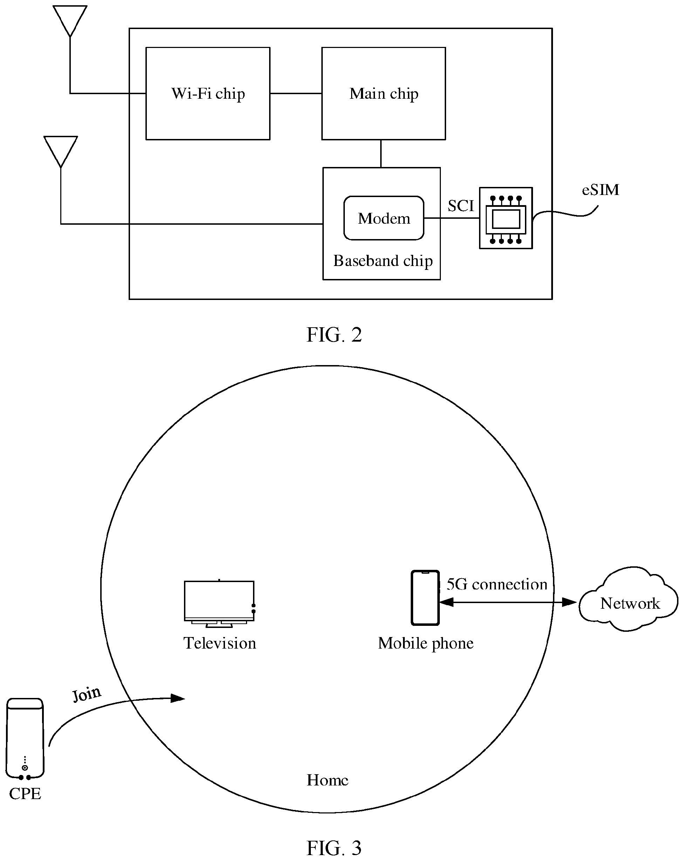

FIG. 2 is a schematic diagram of an example of a hardware structure of an IoT device. It should be understood that the IoT device shown in FIG. 2 is only an example of the IoT device, and the IoT device may have more or fewer components than those shown in the figure.

Refer to FIG. 2. For example, the IoT device may be CPE, and the CPE may include a Wi-Fi chip, a main chip, a baseband chip, an eSIM, and an antenna.

For example, the baseband chip includes a modem (modem processor), and the baseband chip is separately coupled to the main chip and the antenna.

For example, the eSIM is provided with an SCI (Serial Communication Interface, serial communication interface), the modem is provided with an SCI interface, and the SCI interface of the eSIM is coupled to the SCI interface of the modem.

For example, the Wi-Fi chip is separately coupled to the antenna and the main chip.

For example, the Wi-Fi chip, the main chip, the baseband chip, and the eSIM may be independent of each other, or may be integrated onto a same chip. This is not limited in embodiments of this application.

For example, the CPE further includes a memory. A driver corresponding to an SCI is preconfigured in the memory, and the driver is configured to drive the SCI interface. The modem may drive the SCI interface by running the driver, and send and receive data through the SCI interface. For example, the eSIM may drive the SCI interface by running the driver, and send and receive data through the SCI interface. Further, the eSIM and the modem may exchange data through the SCI interface.

For example, a management program is preconfigured in the memory, and the management program is configured to manage the eSIM. The modem may run the management program to exchange data with the eSIM through the SCI interface.

For example, the CPE further includes a power module. After the CPE is started, the modem may control the power module to power on the eSIM.

Because the eSIM is built in, and there is no profile data in the eSIM, a data path may be established, and the profile data can be downloaded for the eSIM in the CPE through the established data path.

For example, the profile data may be a general name of a series of files and data related to an operator in the eSIM. For example, the operator may be a provider that provides a network service.

The following describes how to establish a data path and how to download profile data for the eSIM in the CPE through the established data path.

### Scenario 1

FIG. 3 is a schematic diagram of an example of an application scenario.

Refer to FIG. 3. Terminal devices such as a television and a mobile phone are deployed in a home, but no router is deployed. The terminal devices such as the television and the mobile phone each have a Wi-Fi function. When Wi-Fi signals need to be provided for the terminal devices such as the television and the mobile phone, one CPE may be purchased and added to the home as a router, to provide the Wi-Fi signals for the terminal devices such as the television and the mobile phone. In addition, the mobile phone also has a cellular function, and there may be a wireless connection (for example, a 5G (5th Generation Mobile Communication Technology, 5th generation mobile communication technology) connection) between the mobile phone and a network (including a base station and a core network), so that the mobile phone and the network can exchange data based on the wireless connection.

It should be understood that FIG. 3 shows only some terminal devices in the home, and other terminal devices (such as a speaker, a tablet computer, and a notebook computer) may be further included in the home. This is not limited in embodiments of this application. In addition to 5G, the mobile phone can further support 3G (3rd Generation Mobile Communication Technology, 3rd generation mobile communication technology), 4G (4th Generation Mobile Communication Technology, 4th generation mobile communication technology), 6G (6th Generation Mobile Communication Technology, 6th generation mobile communication technology), and the like. This is not limited in embodiments of this application. Therefore, the wireless connection between the mobile phone and the network may alternatively be a 3G connection, a 4G connection, a 6G connection, or the like.

In a possible implementation, subscription between an operator and an eSIM in the CPE may be first performed, to obtain activation information (for downloading profile data) of the eSIM. Then, the profile data is downloaded for the eSIM based on the activation information.

For example, information required for subscription between the eSIM and the operator includes an eSIM identity document (which may be referred to as an eID (eSIM Identity Document, eSIM identity document)), the eID may be used to uniquely identify the eSIM.

For example, in a CPE production process, the eID of the eSIM in the CPE may be identified on a housing of the CPE or in a CPE user guide. Further, in a possible subscription manner, a user may carry the CPE or the CPE user guide to an operator store, and provide the eID identified on the CPE or in the CPE user guide for a staff member of the operator store to perform subscription. In another possible subscription manner, a user may call an operator store, and provide the eID identified on the CPE or in the CPE user guide for a staff member to perform subscription.

For example, after providing the eID for the staff member, the user may select one or more required services and a required service package from services and service packages provided by the operator. After learning of the eID, the staff member may input the eID and the service and the service package selected by the user to a terminal device (which may be referred to as an operator terminal device) in the operator store, and perform a subscription operation. In response to operation behavior of the staff member, the operator terminal device sends a subscription indication to the operator server, to indicate the operator server to perform subscription with the eSIM.

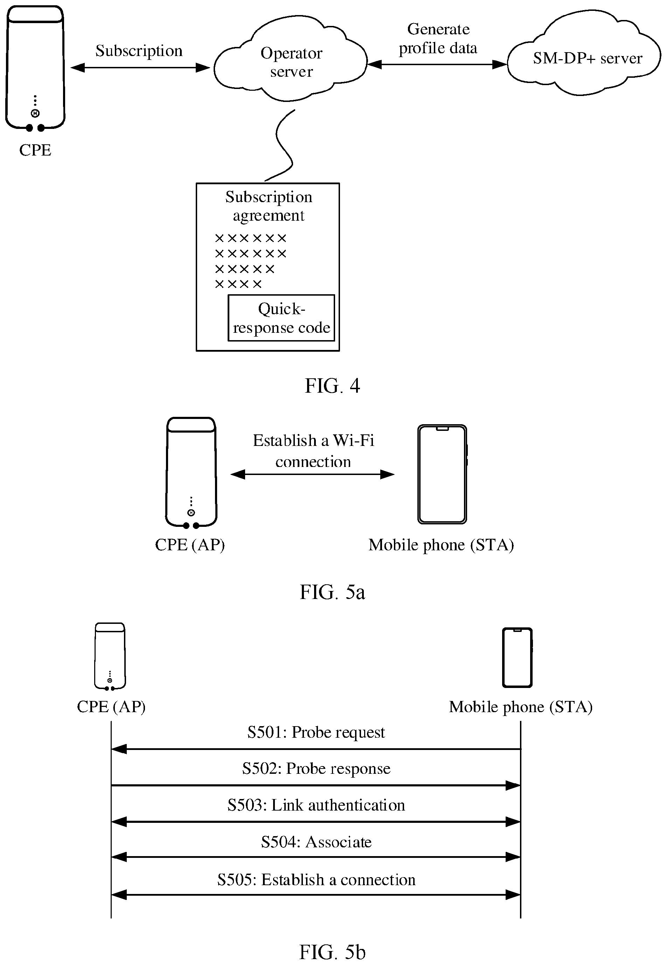

FIG. 4 is a schematic diagram of an example of a subscription process.

Refer to FIG. 4. For example, after receiving the subscription indication of the operator terminal device, the operator server may send a profile data generation indication to an SM-DP+ (Subscription Manager Data Preparation+, Subscription Manager Data Preparation+) server, where the profile data generation indication includes the eID.

For example, after receiving the profile data generation indication, the SM-DP+ server may parse the profile data generation indication, extract the eID from the profile data generation indication, generate profile data corresponding to the eID, establish an association relationship between the eID and the corresponding profile data, and store the association relationship and the profile data.

For example, after the operator server sends the profile data generation indication to the SM-DP+ server, or after the operator server receives a response message returned by the SM-DP+ server, the operator server may generate the activation information and return the activation information to the operator terminal device. Optionally, the operator server may generate a quick-response code that carries the activation information (for example, the operator server may encode the activation information into the quick-response code, that is, the quick-response code represents the activation information), and return the quick-response code to the operator terminal device. Optionally, the operator server may directly return the activation information to the operator terminal device. It should be understood that the operator server may return the activation information to the operator terminal device in any form. This is not limited in embodiments of this application.

It should be noted that, for example, after generating the profile data, the SM-DP+ server may return a response message for profile data generation success to the operator server, or may not need to send the response message to the operator server, which may be set as required. This is not limited in embodiments of this application. Correspondingly, the operator server may generate the activation information based on an address of the SM-DP+ server after sending the profile data generation indication to the SM-DP+ server or receiving the response message for profile data generation success that is returned by the SM-DP+ server. For example, the activation information may include the address of the SM-DP+ server.

For example, when generating the profile data, the SM-DP+ server may generate a label corresponding to the profile data, and then return the label of the profile data to the operator server. The label is used to uniquely identify the profile data. After receiving the label of the profile data, the operator server generates the activation information based on the label of the profile data and the address of the SM-DP+ server. For example, the activation information may include the address of the SM-DP+ server and the label of the profile data. Further, the SM-DP+ server may subsequently verify profile download request information based on the label of the profile data, and determine whether to return the profile data, to improve security of the profile data.

It should be noted that the activation information may include more information than that in the foregoing example, and may be specifically set as required. This is not limited in embodiments of this application.

For example, after receiving the activation information returned by the operator server, the operator terminal device may determine that subscription succeeds. In this case, the operator terminal device may generate a subscription agreement. The subscription agreement may include agreement terms and the activation information. For example, if the operator server returns the quick-response code that carries the activation information to the operator terminal device, the operator terminal device may add the quick-response code that carries the activation information to the subscription agreement, as shown in FIG. 4. For example, if the operator server directly returns the activation information to the operator terminal device, the operator terminal device may directly add the activation information to the subscription agreement. After the subscription agreement is generated, the staff member may perform a printing operation on the operator terminal device. In response to operation behavior of the staff member, the operator terminal device indicates a printing device to print a paper subscription agreement. Further, the user may obtain the paper subscription agreement with the activation information.

Because the CPE does not have a user interface, after the user obtains the paper subscription agreement with the activation information, the user may send the activation information to the CPE by using a mobile phone as an auxiliary device. It should be understood that, for an IoT device (for example, a wearable device) having a user interface, the activation information may also be sent to the IoT device by using a mobile phone. This is not limited embodiments of this application.

FIG. 5a is a schematic diagram of an example of device pairing. Refer to FIG. 5a. CPE may be used as an AP (Wireless Access Point, wireless access point), a mobile phone may be used as a STA (Station, station), and then the mobile phone accesses the CPE to establish a Wi-Fi connection.

For example, a Wi-Fi chip in the CPE includes a plurality of modes (for example, an AP mode, a STA mode, and a Wi-Fi direct mode), and a default mode of the Wi-Fi chip in the CPE is the AP mode. Therefore, the CPE can serve as an AP device without a need to switch the mode of the Wi-Fi chip.

For example, a Wi-Fi chip in the mobile phone also includes a plurality of modes (for example, an AP mode, a STA mode, and a Wi-Fi direct mode), and the mode of the Wi-Fi chip in the mobile phone depends on a user setting. In a possible implementation in which the mode of the Wi-Fi chip in the mobile phone is set as the STA mode, after finding a setting application in the mobile phone, the user may tap the setting application. In response to operation behavior of the user, the mobile phone displays a setting interface of the setting application. One or more controls may be included on the setting interface of the setting application, including but not limited to setting options (for example, a WLAN setting option, a Bluetooth setting option, and a mobile network setting option). The user may search the WLAN setting option on the setting interface, and tap the WLAN setting option. The mobile phone displays a WLAN setting interface in response to operation behavior of the user. One or more controls may be included on the WLAN setting interface, including but not limited to a WLAN status setting option, a connected WLAN setting option (which is located in a connected WLAN column, and can be used to set a connected WLAN and display a WLAN name and signal strength), and an available WLAN setting option (which is located in an available WLAN column). The user slides an on/off button in the WLAN status setting option on the WLAN setting interface. In response to operation behavior of the user, the mobile phone configures a WLAN to an enabled state.

In another possible implementation in which the mode of the Wi-Fi chip in the mobile phone is set as the STA mode, the user performs a slide-down operation. In response to operation behavior of the user, the mobile phone displays a slide-down notification bar interface. One or more controls are included on the slide-down notification bar interface, including but not limited to a WLAN setting option, a personal hotspot setting option, and a brightness setting option. The user taps the WLAN setting option. In response to operation behavior of the user, the mobile phone configures a WLAN to an enabled state.

Further, the mobile phone may serve as a STA device based on the foregoing user operation.

FIG. 5b is a schematic diagram of an example of a communication process. Refer to FIG. 5b. For example, a process of establishing the Wi-Fi connection between the CPE and the mobile phone may be as follows:
S501: The mobile phone sends a probe request (probe request) packet to the CPE.

For example, the user slides the on/off button in the WLAN status setting option on the WLAN setting interface. In response to the operation behavior of the user, the mobile phone configures the WLAN to the enabled state and sends the probe request.

For example, the mobile phone may send the probe request on all channels on a 5 GHz frequency band or a 2.4 GHz frequency band, that is, perform network-wide scanning.

For example, the probe request packet sent by the mobile phone to the CPE carries device information of the mobile phone, including but not limited to at least one of the following: a device model, a device name, and a MAC address. Optionally, the device information may be included in a specified field of the probe request packet, for example, an IE field.

S502: The CPE sends a probe response (probe response) packet to the mobile phone.

For example, after receiving a probe request sent by the mobile phone, the CPE may send a probe response to the mobile phone.

For example, the probe response packet may carry information about a BSS (Basic Service Set, basic service set) to which the CPE belongs, and the information includes but is not limited to information such as an SSID (Service Set Identifier, service set identifier), a rate set, and an authentication mode.

For example, after receiving the probe response returned by the CPE, the mobile phone may display the SSID of the CPE in the available WLAN column on the WLAN setting interface (in other words, a name of a Wi-Fi network provided by the CPE is the available WLAN setting option on the WLAN setting interface).

For example, the Wi-Fi network provided by the CPE may be an encrypted network. For example, the CPE provides an initial password of the Wi-Fi network, and the initial password may be marked on a housing of the CPE or in a CPE user guide. Then, the user taps the SSID of the CPE and inputs the initial password. In response to operation behavior of the user, the mobile phone performs S503 to S505 to access the CPE.

For example, the Wi-Fi network provided by the CPE may be an unencrypted network. Further, the user taps the SSID of the CPE. In response to operation behavior of the user, the mobile phone may perform the following steps S503 to S505 to access the CPE.

S503: The mobile phone performs link authentication with the CPE.

S504: The mobile phone is associated with the CPE.

S505: The mobile phone establishes a connection to the CPE.

For example, after the mobile phone successfully establishes the connection to the CPE, the SSID of the CPE may be displayed in the connected WLAN column on the WLAN setting interface (where in this case, the SSID of the CPE is the connected WLAN setting option on the WLAN setting interface), to notify the user that the mobile phone has successfully accessed the CPE.

It should be noted that S503 to S505 actually include a plurality of times of signaling interaction, to transmit corresponding data or information. For specific interaction details, refer to an interaction process in the 802.11 protocol. Details are not described again in this application.

It should be noted that the process of establishing the Wi-Fi connection in FIG. 5b is merely an example, and a process of performing Wi-Fi communication between the CPE and the mobile phone may include more frame exchange processes than that in FIG. 5b. For information carried in each frame and a format and a function of each frame, refer to descriptions in an existing standard. Details are not described again in this application.

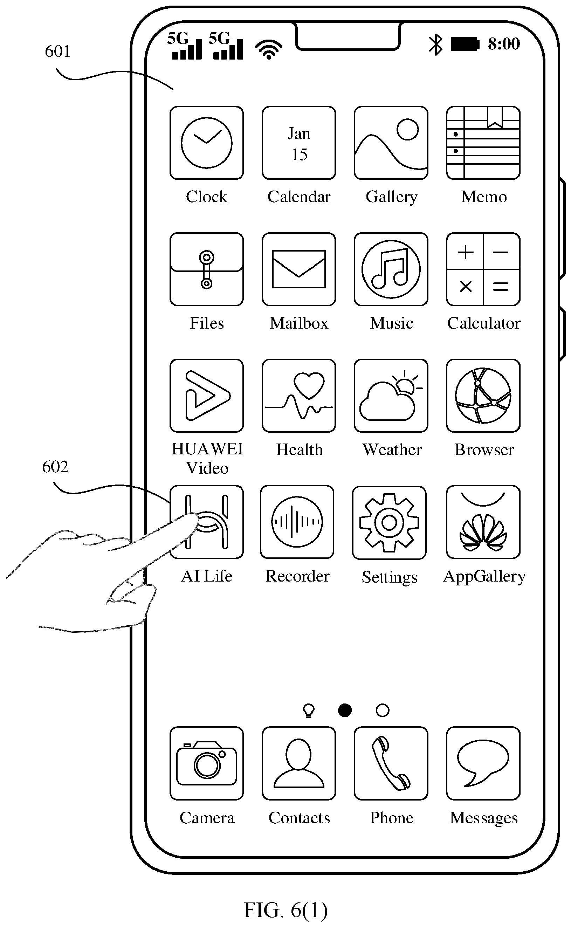

FIG. 6(1) to FIG. 8(2) are schematic diagrams of examples of user interfaces.

Refer to FIG. 6(1) to FIG. 6(4). For example, 601 is a home screen of the mobile phone, and one or more controls are included on the home screen of the mobile phone, including but not limited to an application icon (for example, an application icon of a Huawei Share application and an application icon of a browser application), a network identifier, and a battery level identifier.

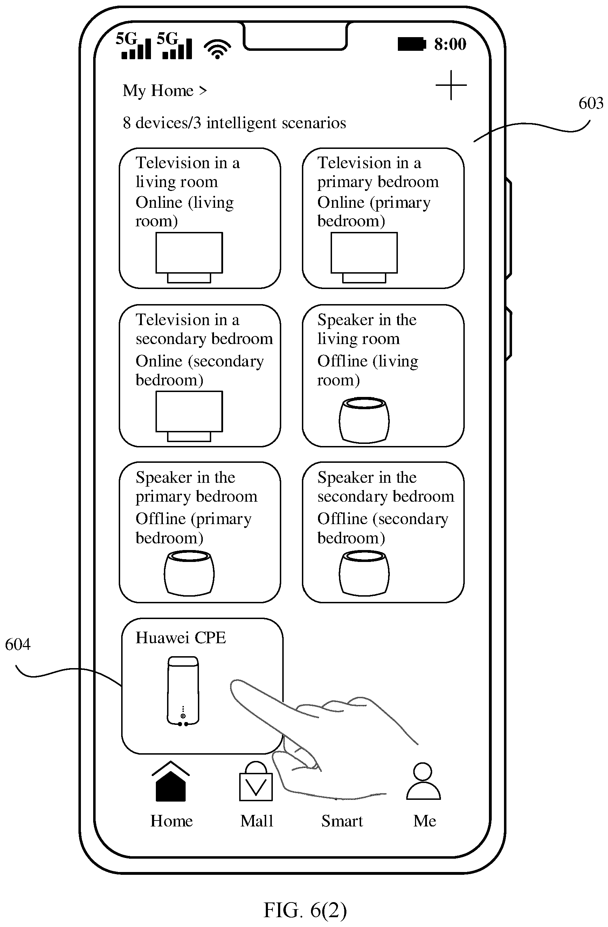

Still refer to FIG. 6(1). For example, the user taps an application icon 602 of an AI Life application. In response to operation behavior of the user, the mobile phone displays an application interface 603 of the AI Life application, as shown in FIG. 6(2). For example, one or more controls are included on the application interface 603 of the AI Life application, including but not limited to: an option setting icon (for example, a home option or a mall option) and a device option (for example, a television in a living room or a television in a primary bedroom). Optionally, the device option may be used to indicate whether a corresponding device is online, and display a name, a type, an icon, and the like of the device. Optionally, the user may tap the device option to enter a management interface of the device, to manage the device.

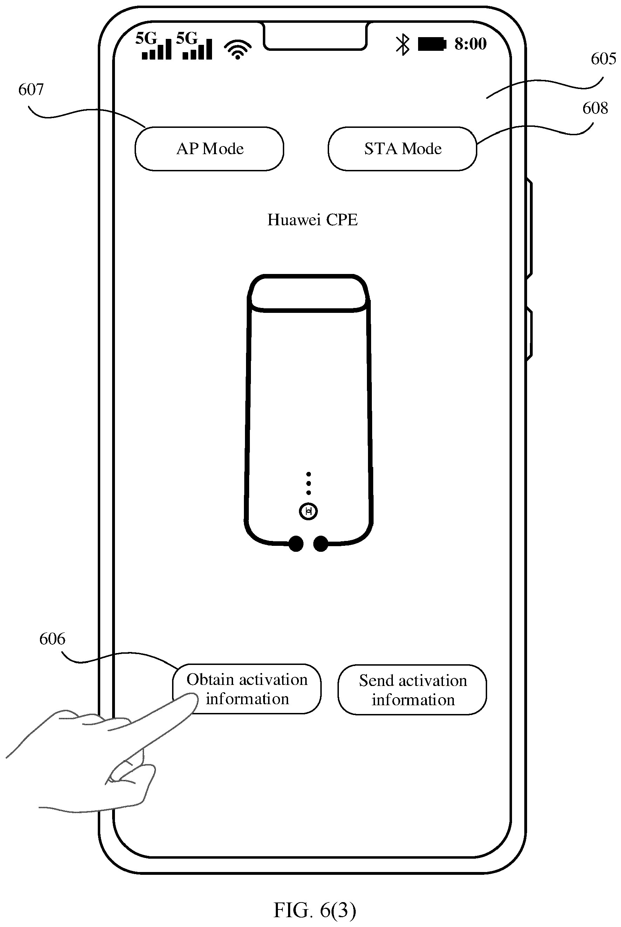

Still refer to FIG. 6(2). For example, after the user taps a device option 604 of Huawei CPE, the mobile phone displays a management interface 605 of the Huawei CPE in response to operation behavior of the user, as shown in FIG. 6(3). One or more controls are included on the management interface 605 of the Huawei CPE, including but not limited to an operation activation option (for example, an activation information obtaining option 606 and an activation information sending option) and a mode switching option (for example, an AP mode option 607 and a STA mode option 608). Optionally, the management interface 605 of the Huawei CPE may further display device information (for example, a CPE icon, a CPE name, a CPE color, a CPE model, and a CPE status). Optionally, by tapping the activation operation option, the user may indicate the mobile phone to perform a corresponding operation.

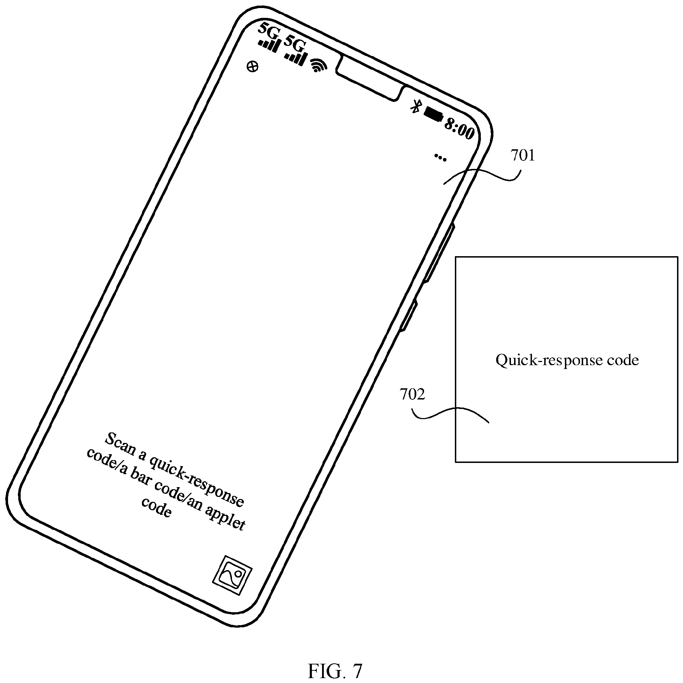

Still refer to FIG. 6(3). For example, if the quick-response code that carries the activation information is displayed in the paper subscription agreement, after the user taps the activation information obtaining option 606, the mobile phone starts a camera and displays a code scanning interface 701 in response to operation behavior of the user, as shown in FIG. 7. For example, one or more controls are included on the code scanning interface 701, including but not limited to an information code type option (for example, a quick-response code, a bar code, and an applet code) and a code scanning interface closing option.

Still refer to FIG. 7. For example, the user may adjust the mobile phone, to adjust the camera of the mobile phone to be directed at a quick-response code 702 that is in the subscription agreement and that is obtained during subscription, so that the complete quick-response code 702 is displayed on the code scanning interface 701. After obtaining the complete quick-response code through scanning, the mobile phone may identify the quick-response code, for example, decode the quick-response code, to obtain activation information carried in the quick-response code 702.

For example, if the activation information is displayed in the paper subscription agreement, after the user taps the activation information obtaining option 606, the mobile phone starts a camera and displays a scanning interface in response to operation behavior of the user. The user may adjust the mobile phone, to adjust the camera of the mobile phone to be directed at the activation information that is in the subscription agreement and that is obtained during subscription, so that the complete activation information is displayed on the scanning interface. After the complete activation information is displayed on the scanning interface, the mobile phone can obtain an image of the complete activation information, and then can perform text recognition on the image of the activation information (for example, OCR (Optical Character Recognition, Optical Character Recognition)), to obtain the activation information.

For example, if the activation information is displayed in the paper subscription agreement, after the user taps the activation information obtaining option 606, the mobile phone displays an activation information input interface in response to operation behavior of the user. One or more controls are included on the activation information input interface, including but not limited to an input box and a confirmation option. After the user manually inputs the activation information in the subscription agreement into the input box and taps the confirmation option, the mobile phone can obtain the activation information.

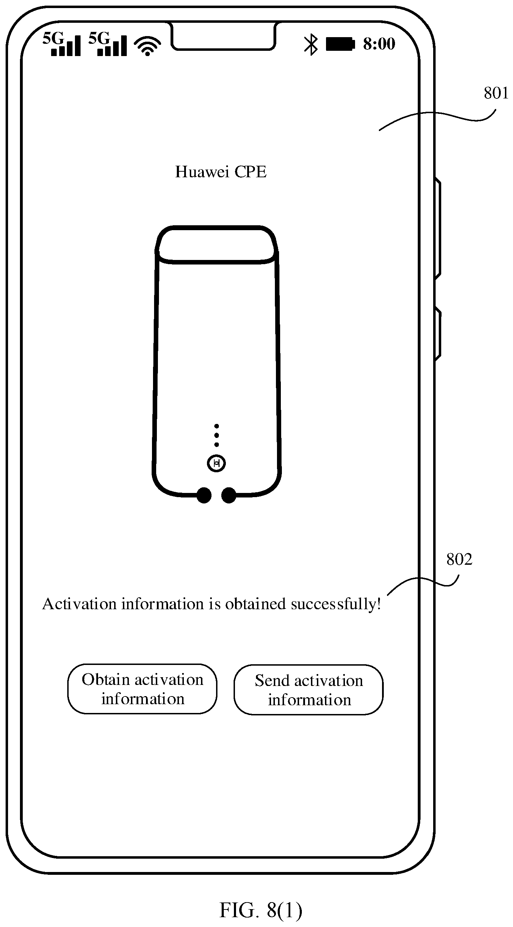

Refer to FIG. 8(1). For example, after the mobile phone successfully obtains the activation information, prompt information (for example, "Activation information is obtained successfully", as shown in 802 in FIG. 8(1)) may be displayed on a management interface 801 of the Huawei CPE.

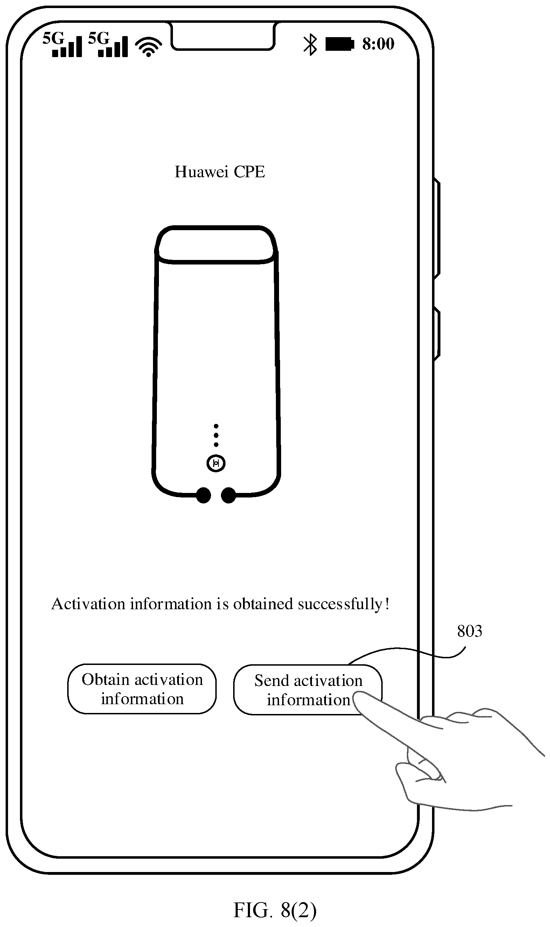

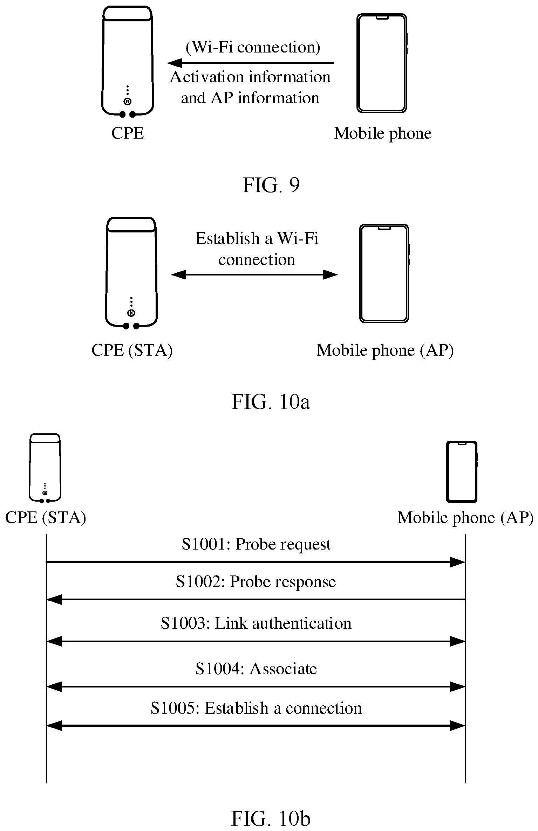

Refer to FIG. 8(2). For example, when the user needs to send the activation information to the CPE, the user may tap an activation information sending option 803. In response to operation behavior of the user, the mobile phone sends the activation information to the CPE based on the Wi-Fi connection between the mobile phone and the CPE, as shown in FIG. 9.

For example, after the user taps the activation information sending option 803, and when or after the mobile phone sends the activation information to the CPE in response to the operation behavior of the user, the mobile phone sends AP information to the CPE based on the Wi-Fi connection between the mobile phone and the CPE. For example, the AP information may be used to connect to the mobile phone, and the AP information may include all information that can be used to connect to a mobile phone hotspot, including but not limited to an SSID of the mobile phone hotspot and a password of the mobile phone hotspot.

Still refer to FIG. 8(1), FIG. 8(2), and FIG. 9. In a possible implementation, after the user taps the activation information sending option 803, in response to the operation behavior of the user, the mobile phone obtains the SSID and the password of the mobile phone hotspot as the AP information, and sends the AP information to the CPE based on the Wi-Fi connection between the mobile phone and the CPE.

In another possible implementation, after the user taps the activation information sending option 803, in response to the operation behavior of the user, the mobile phone displays a prompt interface (for example, a prompt window), where the prompt interface is used to ask the user whether to send the AP information. One or more controls are included on the prompt interface, including but not limited to a confirmation option and a cancellation option. Optionally, AP information sending prompt information (for example, "Is connection information of a mobile phone hotspot sent to CPE?") may be further displayed on the prompt interface. If the user taps the confirmation option, the mobile phone sends the AP information to the CPE based on the Wi-Fi connection between the mobile phone and the CPE in response to operation behavior of the user. If the user taps the cancellation option, the mobile phone does not send the AP information to the CPE, and subsequently, a data path for downloading the profile data cannot be established for the CPE.

It should be noted that, in FIG. 8(2), the activation information sending option 803 may not be set on the management interface of the Huawei CPE. Further, the mobile phone may send the activation information and the AP information to the CPE after obtaining the activation information in response to an operation of tapping the activation information obtaining option by the user. This is not limited in embodiments of this application.

For example, a subscription application is installed in the mobile phone, and the subscription application may be used to perform subscription between the operator and the eSIM. Further, in still another possible subscription manner, a user may perform subscription between the eSIM in the CPE and the operator in the subscription application.

For example, the user taps an application icon of the subscription application on a home screen of the mobile phone. In response to operation behavior of the user, the mobile phone enters a subscription interface of the subscription application. One or more controls may be included on the subscription interface, including but not limited to: an eID setting option (used to edit/obtain the eID) and a subscription option. For example, the user may manually enter the eID in the eID setting option and tap the subscription option based on the eID identified on the housing of the CPE or in the CPE user guide. In response to operation behavior of the user, the mobile phone sends a subscription indication to the network based on the wireless connection between the mobile phone and the network. After receiving the subscription indication, the network may send the subscription indication to an operator server. After receiving the subscription indication of the mobile phone, the operator server may send a profile data generation indication to an SM-DP+ server. The profile data generation indication carries the eID. After receiving the profile data generation indication, the SM-DP+ server may parse the profile data generation indication, extract the eID from the profile data generation indication, generate profile data corresponding to the eID, establish an association relationship between the eID and the corresponding profile data, and store the association relationship and the profile data.

For example, after the operator server sends the profile data generation indication to the SM-DP+ server, or after the operator server receives a response message returned by the SM-DP+ server, the operator server may generate the activation information. In a possible implementation, the operator server may return the activation information to the network. For example, the operator server may return a quick-response code that carries the activation information to the network. After receiving the quick-response code that carries the activation information, the network returns, to the mobile phone based on the wireless connection between the network and the mobile phone, the quick-response code that carries the activation information. For example, the operator server may alternatively directly return the activation information to the network. After receiving the activation information, the network returns the activation information to the mobile phone based on the wireless connection between the network and the mobile phone, which may be specifically set as required. This is not limited in embodiments of this application. For example, after receiving the activation information returned by the network, the mobile phone may display prompt information (for example, "Activation information has been received") on the subscription interface. For example, after receiving the activation information returned by the network, the mobile phone may display the quick-response code or the activation information on the subscription interface.

In a possible implementation, after the operator server generates the activation information, the operator server may generate a subscription agreement based on a service and a service package selected by the user and the generated activation information. The subscription agreement may include agreement terms and the activation information. For example, the operator server may add, to the subscription agreement, a quick-response code that carries the activation information, as shown in FIG. 4. For example, the operator server may directly add the activation information to the subscription agreement. Then, the operator server may return the subscription agreement to the network. After receiving the subscription agreement, the network sends the subscription agreement to the mobile phone based on the wireless connection between the network and the mobile phone. For example, after receiving the activation information returned by the network, the mobile phone may display prompt information (for example, "A subscription agreement has been received and activation information is included in the subscription agreement") on the subscription interface. For example, after receiving the subscription agreement returned by the network, the mobile phone may display the subscription agreement on the subscription interface. For example, after receiving the subscription agreement returned by the network, the mobile phone may alternatively display only the quick-response code or the activation information on the subscription interface.

For example, after the mobile phone establishes a Wi-Fi connection to the CPE, the user may tap the eID setting option on the subscription interface. In response to operation behavior of the user, the mobile phone actively obtains the eID of the CPE based on the Wi-Fi connection established between the mobile phone and the CPE. Then, the user may select a service and a service package, and tap the subscription option. In response to operation behavior of the user, the mobile phone interacts with the operator server to perform subscription. Refer to the foregoing descriptions. Details are not described herein again.

Refer to FIG. 6(1) to FIG. 6(4) again. For example, after the subscription application in the mobile phone receives the activation information, the user may perform an operation with reference to FIG. 6(1) and FIG. 6(2). For the operation of the user in FIG. 6(1) and FIG. 6(2) and a corresponding response of the mobile phone, refer to the foregoing descriptions. Details are not described herein again. Then, the user taps an activation information obtaining option 606 in FIG. 6(3). In response to operation behavior of the user, the mobile phone indicates an AI Life application to interact with the subscription application, and obtains the activation information from the subscription application. For example, if the subscription application receives, in the subscription process, the quick-response code that carries the activation information, in a process of interacting with the AI Life application, the activation information in the quick-response code may be first extracted, and then the activation information is returned to the AI Life application. After obtaining the activation information, the AI Life application may send the activation information and the AP information to the CPE with reference to the foregoing descriptions of FIG. 8(1), FIG. 8(2), and FIG. 9. Details are not described herein again.

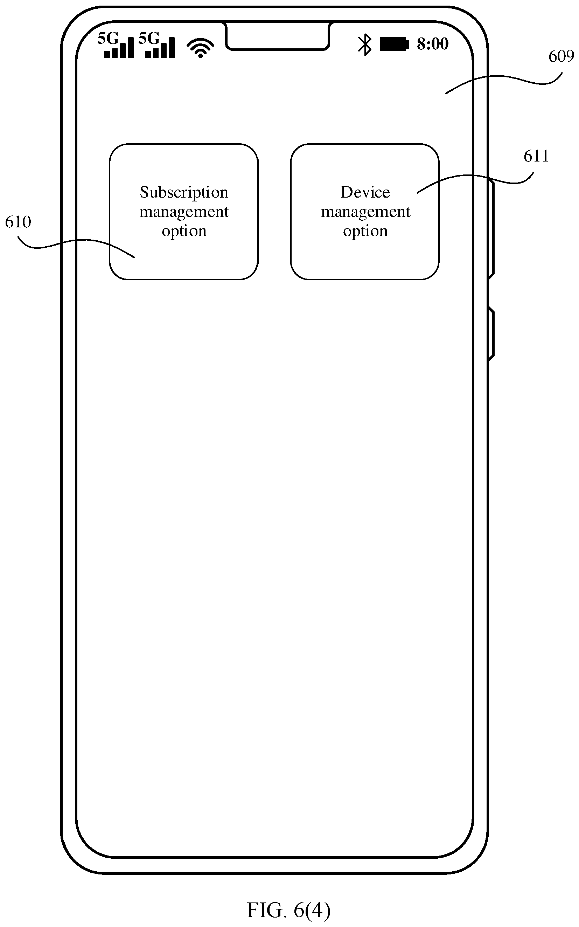

Refer to FIG. 6(1) to FIG. 6(4) again. For example, a function of the subscription application may be integrated in the AI Life application. To be specific, the user may enter the AI Life application and tap a setting option of Huawei CPE to perform subscription between the eSIM in the CPE and the operator, and manage the CPE. For example, the user taps a device option 604 of the Huawei CPE in FIG. 6(2). In response to operation behavior of the user, the mobile phone displays a subscription management interface 609, as shown in FIG. 6(4). One or more controls are included on the subscription management interface 609, including but not limited to a subscription management option 610 and a device management option 611. The user taps the subscription management option 610. In response to operation behavior of the user, the mobile phone displays the subscription interface. The user may perform subscription between the eSIM in the CPE and the operator on the subscription interface, which is similar to the foregoing manner of subscription between the eSIM and the operator on the subscription interface of the subscription application. Details are not described herein again. Further, the AI Life application may receive the quick-response code that carries the activation information or the activation information returned by the operator server through the network. The user performs a return operation. In response to operation behavior of the user, the mobile phone displays the subscription management interface 610. The user taps the device management option 611. In response to the operation behavior of the user, the mobile phone displays an application interface 603 of the AI Life application. For details, refer to FIG. 6(2). After the user taps the device option 604 of the Huawei CPE in FIG. 6(2), the mobile phone displays a management interface 605 of the Huawei CPE in response to operation behavior of the user. For details, refer to FIG. 6(3). For example, the user taps the activation information obtaining option 606 in FIG. 6(3). In response to the operation behavior of the user, the mobile phone indicates the AI Life application to perform internal interaction and obtain the activation information. Refer to FIG. 8(1), FIG. 8(2), and FIG. 9 again. For the operation of the user in FIG. 8(1) and FIG. 8(2) and a corresponding response of the mobile phone, refer to the foregoing descriptions. Details are not described herein again.

For example, a CPE management application is installed in the mobile phone (where the CPE management application is independent of the AI Life application and the subscription application). The user may perform an operation in the CPE management application. In response to operation behavior of the user, the mobile phone may obtain the activation information, and send the activation information and the AP information to the CPE. This is similar to the foregoing operation performed by the user in the AI Life application and the corresponding response of the mobile phone, and is not limited herein.

For example, the subscription application and the CPE management application may be a same application. Further, with reference to the foregoing descriptions, subscription between the eSIM and the operator may be implemented, and the mobile phone may obtain the activation information, and send the activation information and the AP information to the CPE. Details are not described herein again.

For example, the activation information and the AP information may reach a main chip in the CPE through an antenna and a Wi-Fi chip.

It should be noted that a sequence in which the mobile phone obtains the activation information and establishes the Wi-Fi connection to the CPE is not limited in embodiments of this application.

After the CPE receives the activation information, because the CPE does not have a data path, the CPE may download profile data from the SM-DP+ server based on the wireless connection between the mobile phone and the network (for example, a 5G connection between the mobile phone and the network). In this case, the CPE can switch to a STA mode, and the mobile phone can switch to an AP mode.

For example, the CPE may actively switch from the AP mode to the STA mode. For example, after the CPE receives the activation information, the main chip may send a first switching indication to the Wi-Fi chip. After receiving the first switching indication, the Wi-Fi chip may switch from the AP mode to the STA mode in response to the first switching indication, so that the CPE can serve as a STA.

For example, the CPE may switch from the AP mode to the STA mode through an operation of the user on the mobile phone. Refer to FIG. 6(3). The user may tap a STA mode option 608 in FIG. 6(3). In response to operation behavior of the user, the mobile phone sends indication information to the Wi-Fi chip in the CPE based on the Wi-Fi connection between the mobile phone and the CPE. After the Wi-Fi chip in the CPE receives the indication information, the CPE switches from the AP mode to the STA mode, so that the CPE can serve as a STA.

In a possible implementation, the mobile phone automatically switches to the AP mode. For example, after sending the activation information and the AP information, the mobile phone may automatically configure a personal hotspot to be an enabled state, so that the mobile phone can serve as an AP.

In another possible implementation, after tapping an activation information sending operation option in FIG. 6(3), the user may perform an operation of returning to the home screen of the mobile phone. In response to operation behavior of the user, the mobile phone may display the home screen of the mobile phone. After finding a setting application in the mobile phone, the user may tap the setting application. In response to operation behavior of the user, the mobile phone displays a setting interface of the setting application. One or more controls may be included on the setting interface of the setting application, including but not limited to setting options (for example, a WLAN setting option, a Bluetooth setting option, and a mobile network setting option). The user finds the mobile network setting option on the setting interface of the setting application, and taps the mobile network setting option. The mobile phone displays a mobile network setting interface in response to operation behavior of the user. One or more controls may be included on the mobile network setting interface, including but not limited to an airplane mode status setting option, a mobile data setting option, and a personal hotspot setting option. The user finds the personal hotspot setting option, and taps the personal hotspot setting option. The mobile phone displays the personal hotspot setting interface in response to operation behavior of the user. One or more control items may be included on the personal hotspot setting interface, including but not limited to a personal hotspot status setting option, a device name editing option, and a device password editing option. The user slides an on/off control on the personal hotspot status setting option. In response to operation behavior of the user, the mobile phone configures a personal hotspot to be an enabled state.

In still another possible implementation, after tapping an activation information sending operation option in FIG. 6(3), the user performs a slide-down operation. In response to operation behavior of the user, the mobile phone displays a slide-down notification bar interface. One or more controls are displayed on the slide-down notification bar interface, including but not limited to a WLAN setting option, a personal hotspot setting option, and a brightness setting option. The user taps the personal hotspot setting option of the mobile phone. In response to operation behavior of the user, the mobile phone configures a personal hotspot to be an enabled state.

FIG. 10a is a schematic diagram of an example of device pairing. Refer to FIG. 10a. For example, the CPE is used as a STA, and the mobile phone is used as an AP. Further, the CPE may access the mobile phone to establish the Wi-Fi connection.

FIG. 10b is a schematic diagram of an example of a communication process. For example, a communication process in which the CPE establishes the Wi-Fi connection to the mobile phone may be as follows:
S1001: The CPE sends a probe request (probe request) packet to the mobile phone.
S1002: The mobile phone sends a probe response (probe response) packet to the CPE.

For example, after receiving the probe response sent by the mobile phone, the CPE may match an SSID in the probe response with an SSID in the AP information received by the CPE. If the SSIDs are consistent, the CPE may input a password in the received AP information. Then, S1003 to S1005 are performed.

S1003: The mobile phone performs link authentication with the CPE.

S1004: The mobile phone is associated with the CPE.

S1005: The mobile phone establishes a connection to the CPE.

S1001 to S1005 are similar to S501 to S505. Details are not described herein again.

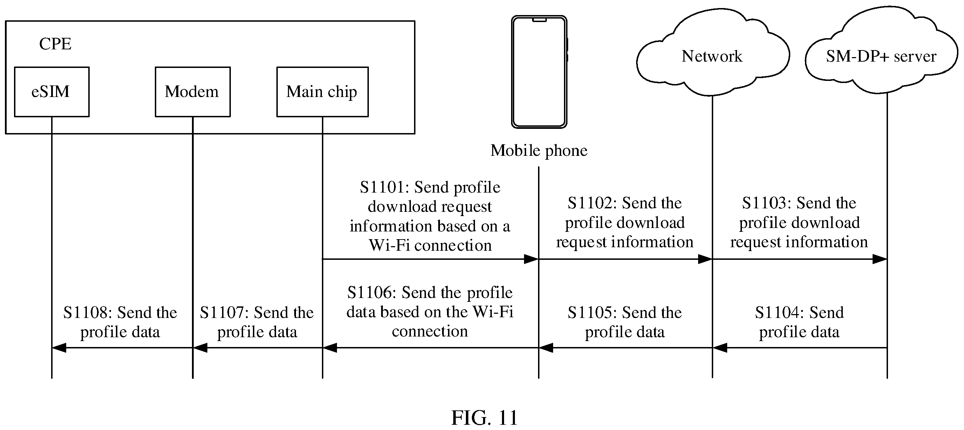

FIG. 11 is a schematic diagram of an example of a data exchange process. The Wi-Fi connection is established between the CPE and the mobile phone, and a wireless connection (for example, a 5G connection) is established between the mobile phone and the SM-DP+ server.

S1101: The main chip sends profile download request information to the mobile phone based on the Wi-Fi connection.

For example, the main chip may indicate a modem to obtain an eID from the eSIM through an SCI interface, and then the main chip may generate the profile download request information based on the obtained eID of the eSIM and the activation information, where the profile download request information includes the eID and the activation information.

For example, if the activation information does not include a label of the profile data, the profile download request information carries the eID and an address of an SM-DP+ server. For example, if the activation information includes a label of the profile data, the profile download request information carries the eID, the label of the profile data, and an address of an SM-DP+ server.

For example, an LPA (Local Profile Assistant, local profile assistant) is preset in a memory, and the LPA may be used to forward the profile download request information and the profile data. For example, the main chip includes a processor, and the processor in the main chip may be configured to run the LPA. For example, the processor of the main chip may run the LPA, so that the LPA obtains the address of the SM-DP+ server from the profile download request information (to subsequently determine whether the received data is the profile data), and sends the profile download request information to the mobile phone based on the Wi-Fi connection between the CPE and the mobile phone.

S1102: The mobile phone sends the profile download request information to the network.

For example, after receiving the profile download request information, the mobile phone passes through the profile download request information to the network based on the wireless connection (for example, a 5G connection) between the mobile phone and the network. Pass-through may mean that, in communication, regardless of to-be-transmitted service content, to-be-transmitted content is only transmitted from a source address to a destination address, and service data content is not changed.

S1103: The network sends the profile download request information to the SM-DP+ server.

For example, after receiving the profile download request information, the network may send the profile download request information to the SM-DP+ server based on the address of the SM-DP+ server.

S1104: The SM-DP+ server sends the profile data to the network.

For example, after receiving the profile download request information, the SM-DP+ server may parse the profile download request information.

For example, if the profile download request information carries the eID, the SM-DP+ server may extract the eID from the profile download request information. Then, the SM-DP+ server may search, based on the eID extracted from the profile download request information, an association relationship established when the profile data is generated, determine the corresponding profile data, and return the profile data to the network.

For example, if the profile download request information carries the eID and the label of the profile data, the SM-DP+ server may extract the eID and the label of the profile data from the profile download request information. Then, the SM-DP+ server may search, based on the eID extracted from the profile download request information, an association relationship established when the profile data is generated, determine the corresponding profile data, and compare the label that is of the profile data and that is extracted from the profile download request information with the label that is of the profile data that is searched based on the eID. If two labels are consistent, the profile data is returned to the network. Then, data security is improved through secondary verification.

S1105: The network sends the profile data to the mobile phone.

For example, after receiving the profile data, the network returns the profile data to the mobile phone based on the wireless connection (for example, the 5G connection) between the mobile phone and the network.

S 1106: The mobile phone sends the profile data to the main chip based on the Wi-Fi connection.

For example, after receiving the profile data, the mobile phone passes through the profile data to the CPE based on the Wi-Fi connection between the mobile phone and the CPE.

For example, the data sent by the mobile phone may reach the main chip in the CPE through the antenna and the Wi-Fi chip.

S 1107: The main chip sends the profile data to the modem.

For example, after the main chip in the CPE receives the data sent by the mobile phone, the processor of the main chip may run the LPA, and the LPA determines whether the data received by the main chip is the profile data. For example, the LPA may extract a source IP address (Internet Protocol Address, Internet protocol address) from the data received by the main chip, and then compare the source IP address with the address of the SM-DP+ server to determine whether the data received by the main chip is the profile data.

For example, if the source IP address is the same as the address of the SM-DP+ server, it may be determined that the data received by the main chip is the profile data. In this case, the LPA sends forwarding information that includes the profile data to the modem, where the forwarding information indicates to forward the profile data to the eSIM.

For example, if the source IP address is different from the address of the SM-DP+ server, it may be determined that the data received by the main chip is not the profile data. In this case, the processor of the main chip may run another program to process the data.

S 1108: The modem sends the profile data to the eSIM.

For example, after receiving the forwarding information, the modem may run a management program, and the management program sends the forwarding information to the eSIM through the SCI interface with the eSIM, so that the profile data is forwarded to the eSIM.

For example, after the main chip sends the profile data to the eSIM, the CPE may switch from the STA mode to the AP mode, so that the CPE serves as an AP. Then, the main chip in the CPE accesses the network by using the eSIM and the modem. After the CPE successfully accesses the network by using the eSIM, the wireless connection (for example, a 5G connection) may be established between the CPE and the network, so that the CPE can serve as a router.

For example, after the CPE successfully accesses the network by using the eSIM, the CPE may switch from the STA mode to the AP mode, so that the CPE can serve as a router.

For example, the main chip may send a second switching indication to the Wi-Fi chip. After receiving the second switching indication, the Wi-Fi chip may switch from the STA mode to the AP mode in response to the second switching indication, so that the CPE can serve as a router.

For example, the CPE may switch from the STA mode to the AP mode through an operation of the user on the mobile phone. Refer to FIG. 6(3). The user may tap an AP mode option 607 in FIG. 6(3). In response to operation behavior of the user, the mobile phone sends an indication to the Wi-Fi chip in the CPE based on the Wi-Fi connection between the mobile phone and the CPE. After the Wi-Fi chip in the CPE receives the indication, the CPE switches from the STA mode to the AP mode, so that the CPE can serve as an AP.

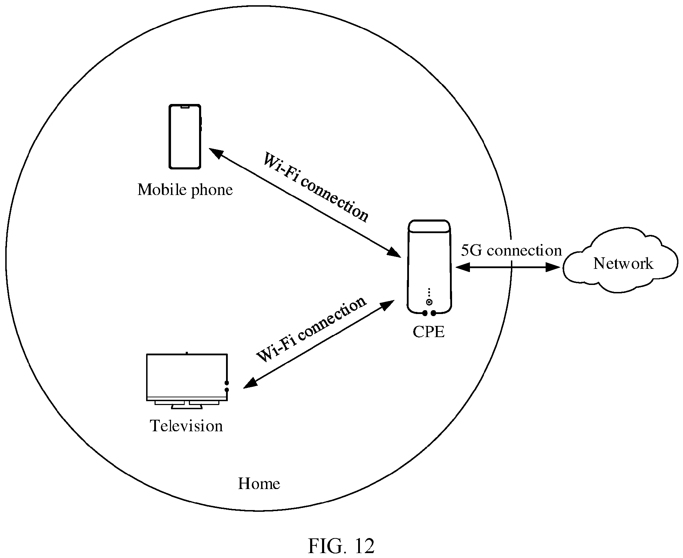

FIG. 12 is a schematic diagram of an example of an application scenario. Refer to FIG. 12. After the CPE can serve a router, the CPE is added to a home as a router of the home. After the CPE joins the home, a user may separately perform a Wi-Fi connection operation on terminal devices such as a mobile phone and a television. The terminal devices such as the mobile phone and the television may separately establish a Wi-Fi connection to the CPE in response to operation behavior of the user. After the terminal devices such as the mobile phone and the television successfully establish the Wi-Fi connection to the CPE, the terminal devices such as the mobile phone and the television can be connected to a network.

It should be understood that, when another terminal device having a Wi-Fi function still exists in the home, the user may connect, as required, the terminal device to the CPE to access a network. This is not limited in embodiments of this application.

It can be learned from the foregoing descriptions that, in this embodiment of this application, through mode switching of a Wi-Fi chip in an IoT device with a built-in eSIM, the IoT device with the built-in eSIM has a capability of connecting to a hotspot of a terminal device, so that profile data can be downloaded from an SM-DP+ server based on a wireless connection (for example, a 5G connection) between the terminal device and the network. Compared with the conventional technology in which the profile data is downloaded through a data path established by using a Bluetooth chip, in this embodiment of this application, a Bluetooth chip that is configured to download the profile data only does not need to be deployed in the IoT device that has no Bluetooth application scenario. This reduces device costs. In addition, default profile (default profile) does not need to be preset in the eSIM. This reduces costs of a supplier for providing the default profile. In addition, the Wi-Fi chip can automatically perform mode switching, thereby reducing user operations and improving user experience.

### Scenario 2

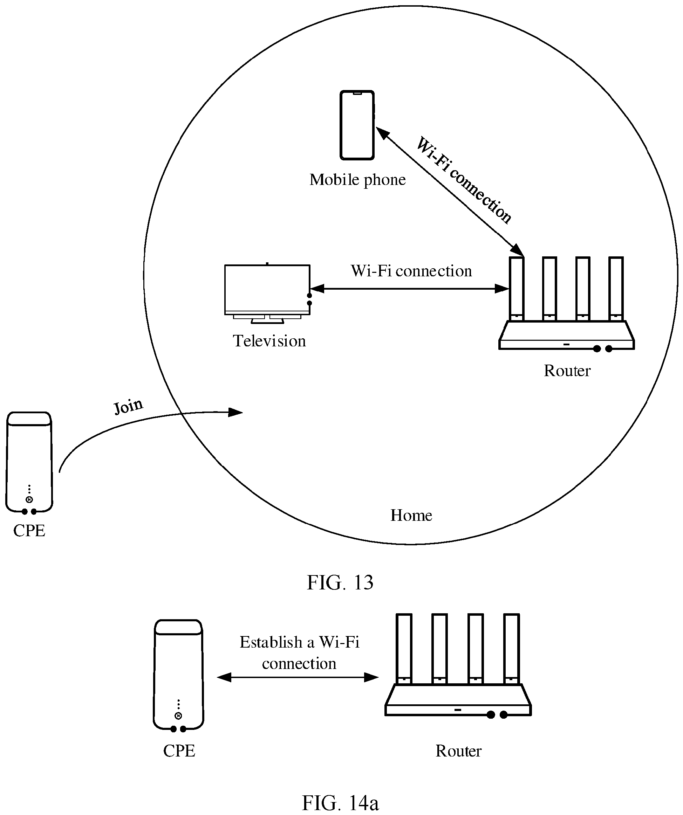

FIG. 13 is a schematic diagram of an example of an application scenario. As shown in FIG. 13, a television, a mobile phone, and a router are deployed in a home. The television and the mobile phone each have a Wi-Fi function. The television and the mobile phone each may establish a Wi-Fi connection to the router to access a network. In addition, the mobile phone also has a cellular function, and there may be a wireless connection (for example, a 5G (5th Generation Mobile Communication Technology, 5th generation mobile communication technology) connection) between the mobile phone and the network (including a base station and a core network), so that the mobile phone and the network can exchange data based on the wireless connection.

In a possible scenario, when the router in the home needs to be replaced, one CPE may be purchased and added to the home as a new router, to replace the existing router in the home, and provide Wi-Fi signals for the television and the mobile phone.

In another possible scenario, when a router needs to be added to the home, one CPE may be purchased and added to the home as a new router, and the existing router in the home is still used. In this case, both the CPE and the existing router in the home can provide a Wi-Fi signal for the television and the mobile phone.

It should be understood that FIG. 13 shows only some terminal devices in the home, and other terminal devices (such as a speaker, a tablet computer, and a notebook computer) may be further included in the home. This is not limited in embodiments of this application. In addition to 5G, the mobile phone can further support 3G, 4G, 6G, and the like. This is not limited in embodiments of this application. Therefore, a connection between the mobile phone and the network may alternatively be a 3G connection, a 4G connection, a 6G connection, or the like.

For example, subscription between an operator and an eSIM in the CPE may be first performed. For example, if a user performs subscription between the operator and the eSIM in the CPE in an operator store, for a process of subscription between the operator and the eSIM in the CPE, refer to FIG. 4 again and descriptions in the foregoing scenario 1. Details are not described herein again. For example, if the user performs subscription between the operator and the eSIM in the CPE in the operator store, the mobile phone may obtain activation information by scanning a quick-response code. For details, refer to descriptions in the foregoing scenario 1. Details are not described herein again.

For example, if the user performs subscription between the operator and the eSIM in the CPE on a subscription interface of the mobile phone, a subscription process of the mobile phone and a process of obtaining the activation information may be as follows: If the mobile phone and the router keep a Wi-Fi connection state, the user enters the subscription interface and taps a subscription option on the subscription interface. In response to operation behavior of the user, the mobile phone sends a subscription indication to the router based on the Wi-Fi connection between the mobile phone and the router. After receiving the subscription indication, the router forwards the subscription indication to an operator server. After receiving the subscription indication, the operator server may send a profile data generation indication to an SM-DP+ server, where the profile data generation indication carries an eID. After receiving the profile data generation indication, the SM-DP+ server may parse the profile data generation indication, extract the eID from the profile data generation indication, generate profile data corresponding to the eID, establish an association relationship between the eID and the corresponding profile data, and store the association relationship and the profile data.

For example, after the operator server sends the profile data generation indication to the SM-DP+ server, or after the operator server receives a response message returned by the SM-DP+ server, the operator server may generate the activation information.

It should be noted that, for example, after generating the profile data, the SM-DP+ server may return a response message for profile data generation success to the operator server, or may not need to send the response message to the operator server, which may be set as required. This is not limited in embodiments of this application. Correspondingly, the operator server may generate the activation information based on an address of the SM-DP+ server after sending the profile data generation indication to the SM-DP+ server or receiving the response message for profile data generation success that is returned by the SM-DP+ server. For example, the activation information may include the address of the SM-DP+ server.

For example, when generating the profile data, the SM-DP+ server may generate a label corresponding to the profile data, and then return the label of the profile data to the operator server. The label is used to uniquely identify the profile data. After receiving the label of the profile data, the operator server generates the activation information based on the label of the profile data and the address of the SM-DP+ server. For example, the activation information may include the address of the SM-DP+ server and the label of the profile data.

It should be noted that the activation information may include more information than that in the foregoing example, and may be specifically set as required. This is not limited in embodiments of this application.

In a possible implementation, the SM-DP+ server may return the activation information to the router. For example, the operator server may return a quick-response code that carries the activation information to the router. After receiving the quick-response code that carries the activation information, the router returns, to the mobile phone based on the Wi-Fi connection between the router and the mobile phone, the quick-response code that carries the activation information. For example, the operator server may alternatively directly return the activation information to the router. After receiving the activation information, the router returns the activation information to the mobile phone based on the Wi-Fi connection between the router and the mobile phone, which may be specifically set as required. This is not limited in embodiments of this application. For example, after receiving the activation information returned by the router, the mobile phone may display prompt information (for example, "Activation information has been received") on the subscription interface. For example, after receiving the activation information returned by the router, the mobile phone may display the quick-response code or the activation information on the subscription interface.

In a possible implementation, after the operator server generates the activation information, the operator server may generate a subscription agreement based on a service and a service package selected by the user and the generated activation information. The subscription agreement may include agreement terms and the activation information. For example, the operator server may add, to the subscription agreement, a quick-response code that carries the activation information, as shown in FIG. 4. For example, the operator server may directly add the activation information to the subscription agreement. Then, the operator server may return the subscription agreement to the router. After receiving the subscription agreement, the router sends the subscription agreement to the mobile phone based on the Wi-Fi connection between the router and the mobile phone. For example, after receiving the activation information returned by the router, the mobile phone may display prompt information (for example, "A subscription agreement has been received and activation information is included in the subscription agreement") on the subscription interface. For example, after receiving the subscription agreement returned by the router, the mobile phone may display the subscription agreement on the subscription interface. For example, after receiving the subscription agreement returned by the router, the mobile phone may alternatively display only the quick-response code or the activation information on the subscription interface.

It should be noted that, if the user performs subscription between the operator and the eSIM in the CPE on the subscription interface of the mobile phone, but the mobile phone and the router do not keep the Wi-Fi connection, for the subscription process of the mobile phone and the process of obtaining the activation information, refer to descriptions in the foregoing scenario 1. That is, the mobile phone obtains the activation information based on the wireless connection between the mobile phone and the network. Details are not described herein again.

For example, the CPE may be used as an AP, and the mobile phone may be used as a STA. Further, the mobile phone may access the CPE, and establish a Wi-Fi connection to the CPE. For details, refer to FIG. 5a, FIG. 5b, and descriptions in the foregoing scenario 1. Details are not described herein again.

It should be noted that a sequence in which the mobile phone obtains the activation information and establishes the Wi-Fi connection to the CPE is not limited in embodiments of this application.

For example, for a process in which the mobile phone sends the activation information, refer to FIG. 6(1) to FIG. 9 and descriptions in the foregoing scenario 1. Details are not described herein again.

For example, if the mobile phone has established the Wi-Fi connection to the router, or the mobile phone and the router keep the Wi-Fi connection state, when or after the mobile phone sends the activation information to the CPE, AP information sent to the CPE may be used to connect to the router. The AP information may include all information that can be used to connect to the router, including but not limited to an SSID of a Wi-Fi signal provided by the router and a password of the Wi-Fi signal provided by the router.

Refer to FIG. 8(2) again. For example, after the user taps an activation information sending option 803 in FIG. 8(2), in a possible implementation, in response to operation behavior of the user, the mobile phone may use, as the AP information, the SSID and the password of the router that are obtained when the user establishes the Wi-Fi connection between the mobile phone and the router, and send the AP information to the CPE based on the Wi-Fi connection between the mobile phone and the CPE.

In another possible implementation, after the user taps the activation information sending option 803 in FIG. 8(2), the mobile phone may display an AP selection interface in response to operation behavior of the user. The AP selection interface may include one or more controls such as a mobile phone hotspot option and a router WLAN option. After the user taps the router WLAN option, in response to operation behavior of the user, the mobile phone may use, as the AP information, the SSID and the password of the router that are obtained when the user establishes the Wi-Fi connection between the mobile phone and the router, and send the AP information to the CPE based on the Wi-Fi connection established between the mobile phone and the CPE. It should be noted that, if the user taps the mobile phone hotspot option, the mobile phone may obtain an SSID and a password of a mobile phone hotspot as the AP information in response to operation behavior of the user, and send the AP information to the CPE based on the Wi-Fi connection established between the mobile phone and the CPE. In this case, in a possible manner, the CPE subsequently downloads the profile data based on the wireless connection between the mobile phone and the network. This is similar to the foregoing scenario 1. Details are not described herein again. It should be noted that, in this case, a possible wireless connection between the mobile phone and the network may include a 5G connection between the mobile phone and the network, the Wi-Fi connection between the mobile phone and the router, and a wireless connection between the router and the network. This is not limited herein.

For example, if the mobile phone has not established the Wi-Fi connection to the router, after the user taps the activation information sending option 803 in FIG. 8(2), the mobile phone may display a Wi-Fi connection interface in response to operation behavior of the user. One or more controls may be included on the Wi-Fi connection interface, including but not limited to an SSID selection option, a password editing option, and a connection option. After the user selects an SSID of the router in the home in the SSID selection option and enters a Wi-Fi password of the router in the home in the password editing option, the user may click a connection option. In response to operation behavior of the user, the mobile phone may use the obtained SSID and password of the router as the AP information, and send the AP information to the CPE.

For example, if the mobile phone has not established the Wi-Fi connection to the router, after the user taps the activation information sending option 803 in FIG. 8(2), the mobile phone may obtain an SSID and a password of a mobile phone hotspot in response to operation behavior of the user, use the SSID and password as the AP information, and automatically send the AP information to the CPE based on the Wi-Fi connection established between the mobile phone and the CPE. This is similar to the foregoing scenario 1. Details are not described herein again.

For example, if the mobile phone has not established the Wi-Fi connection to the router, after the user taps the activation information sending option 803 in FIG. 8(2), the mobile phone may display an AP information sending prompt interface in response to operation behavior of the user. One or more controls are included on the AP information sending prompt interface, including but not limited to a confirmation option and a cancellation option. Optionally, AP information sending prompt information (for example, "Is connection information of a mobile phone hotspot sent to CPE?") may be further displayed on the AP information sending prompt interface. If the user taps the confirmation option, the mobile phone sends the AP information to the CPE based on the Wi-Fi connection between the mobile phone and the CPE in response to operation behavior of the user. If the user taps the cancellation option, the mobile phone does not send the AP information to the CPE, and subsequently, a data path for downloading the profile data cannot be established for the CPE. This is similar to the foregoing scenario 1. Details are not described herein again.

After the CPE receives the activation information, because the CPE does not have a data path, the CPE may download the profile data from the SM-DP+ server based on a wireless connection between the router and the SM-DP+ server. In this case, the CPE may switch to a STA mode.

For example, the CPE may actively switch from an AP mode to the STA mode. For example, after the CPE receives the activation information, a main chip may send a third switching indication to a Wi-Fi chip. After receiving the third switching indication, the Wi-Fi chip may switch from the AP mode to the STA mode in response to the third switching indication, so that the CPE can serve as a STA.

For example, the CPE may switch from the AP mode to the STA mode through an operation of the user on the mobile phone. Refer to FIG. 6(3). The user may tap a STA mode option 608 in FIG. 6(3). In response to operation behavior of the user, the mobile phone sends an indication to the Wi-Fi chip in the CPE based on the Wi-Fi connection between the mobile phone and the CPE. After the Wi-Fi chip in the CPE receives the indication, the CPE switches from the AP mode to the STA mode, so that the CPE can serve as a STA.

FIG. 14a is a schematic diagram of an example of device pairing. Refer to FIG. 14a. For example, the CPE is used as a STA, and the router is used as an AP. Further, the CPE accesses the router to establish the Wi-Fi connection.

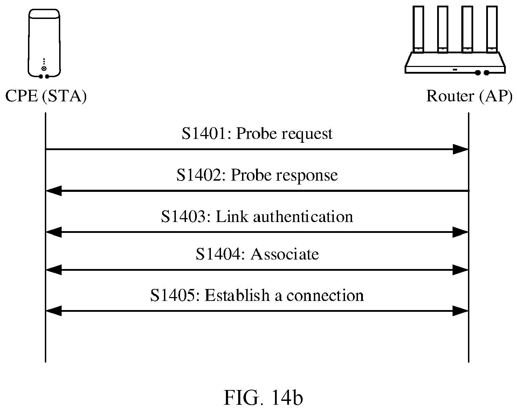

FIG. 14b is a schematic diagram of an example of a communication process. Refer to FIG. 14b. For example, a process of establishing the Wi-Fi connection between the CPE and the router may be as follows:
S1401: The CPE sends a probe request (probe request) packet to the router.
S1402: The router sends a probe response (probe response) packet to the CPE.

For example, after receiving the probe response sent by the router, the CPE may match an SSID in the probe response with an SSID in the AP information received by the CPE. If the SSIDs are consistent, the CPE may input a password in the received AP information. Then, S1403 to S1405 are performed.

S1403: The router performs link authentication with the CPE.

S1404: The router is associated with the CPE.

S1405: The router establishes a connection to the CPE.

S1401 to S1405 are similar to S501 to S505. Details are not described herein again. It should be noted that, compared with FIG. 5b, in FIG. 14b, the STA is the CPE, and the AP is the router. The CPE performs scanning and sends the probe request.

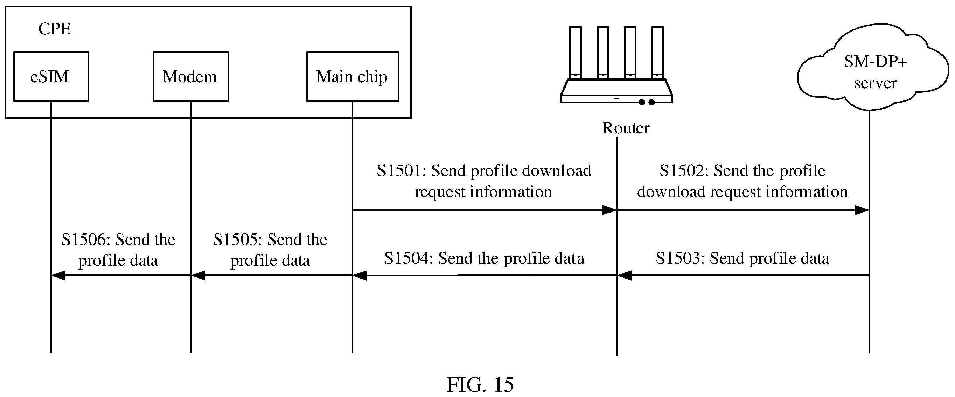

FIG. 15 is a schematic diagram of an example of a data exchange process. The Wi-Fi connection is established between the CPE and the router, and the wireless connection is established between the router and the SM-DP+ server.

S1501: The main chip sends profile download request information to the router.

For example, the main chip may indicate a modem to obtain the eID from the eSIM through an SCI interface, and then the main chip may generate the profile download request information based on the obtained eID of the eSIM and the activation information, where the profile download request information includes the eID and the activation information.

For example, if the activation information does not include the label of the profile data, the profile download request information carries the eID and the address of the SM-DP+ server. For example, if the activation information includes the label of the profile data, the profile download request information carries the eID, the label of the profile data, and the address of the SM-DP+ server.

For example, an LPA is preset in a memory, and the LPA may be used to forward the profile download request information and the profile data. For example, the main chip includes a processor, and the processor in the main chip may be configured to run the LPA. For example, the processor of the main chip may run the LPA, so that the LPA obtains the address of the SM-DP+ server from the profile download request information (to subsequently determine whether the received data is the profile data), and sends the profile download request information to the router based on the Wi-Fi connection between the CPE and the mobile phone.

S1502: The router sends the profile download request information to the SM-DP+ server.

For example, after receiving the profile download request information, the router forwards the profile download request information to the SM-DP+ server.

S1503: The SM-DP+ server sends the profile data to the router.

For example, after receiving the profile download request information, the SM-DP+ server may parse the profile download request information.

For example, if the profile download request information carries the eID, the SM-DP+ server may extract the eID from the profile download request information. Then, the SM-DP+ server may search, based on the eID extracted from the profile download request information, the association relationship established when the profile data is generated, determine the corresponding profile data, and return the profile data to the router.

For example, if the profile download request information carries the eID and the label of the profile data, the SM-DP+ server may extract the eID and the label of the profile data from the profile download request information. Then, the SM-DP+ server may search, based on the eID extracted from the profile download request information, the association relationship established when the profile data is generated, determine the corresponding profile data, and compare the label that is of the profile data and that is extracted from the profile download request information with the label that is of the profile data that is searched based on the eID. If two labels are consistent, the profile data is returned to the router. Then, data security is improved through secondary verification.

S1504: The router sends the profile data to the main chip.

For example, after receiving the profile data, the router forwards the profile data to the CPE based on the Wi-Fi connection between the router and the CPE.

For example, the data sent by the router may reach the main chip in the CPE through an antenna and the Wi-Fi chip.

S1505: The main chip sends the profile data to the modem.

S1506: The modem sends the profile data to the eSIM.

For example, S1505 and S1506 may be similar to S1107 and S1108 in the foregoing scenario 1. Details are not described herein again.

For example, after the main chip sends the profile data to the eSIM, the CPE may switch from the STA mode to the AP mode, so that the CPE serves as an AP. Then, the main chip in the CPE accesses a network by using the eSIM and the modem. After the CPE successfully accesses the network by using the eSIM, the wireless connection (for example, a 5G connection) may be established between the CPE and the network, so that the CPE can serve as a router.

For example, after the CPE successfully accesses the network by using the eSIM, the CPE may switch from the STA mode to the AP mode, so that the CPE can serve as a router.

For example, the main chip may send a second switching indication to the Wi-Fi chip. After receiving the second switching indication, the Wi-Fi chip may switch from the STA mode to the AP mode in response to the second switching indication, so that the CPE can serve as a router.

For example, the CPE may switch from the STA mode to the AP mode through an operation of the user on the mobile phone. Refer to FIG. 6(3). The user may tap an AP mode option 607 in FIG. 6(3). In response to operation behavior of the user, the mobile phone sends an indication to the Wi-Fi chip in the CPE based on the Wi-Fi connection between the mobile phone and the CPE. After the Wi-Fi chip in the CPE receives the indication, the CPE switches from the STA mode to the AP mode, so that the CPE can serve as an AP.

Refer to FIG. 12 again. In a possible implementation, after the CPE can serve as a router, the CPE may be added to the home as a new router, to replace the existing router in the home, and provide the Wi-Fi signals for the terminal devices such as the mobile phone and the television in the home.

In a possible implementation, the CPE may alternatively be added to the home as a new router, and the existing router in the home is still used. Further, both the CPE and the existing router in the home may provide the Wi-Fi signals for the terminal devices such as the mobile phone and the television. Optionally, the CPE and the existing router in the home may be deployed in different spaces of the home, to provide the Wi-Fi signals for devices in the different spaces. Optionally, the CPE and the existing router in the home may be deployed in a same space of the home, to provide the Wi-Fi signals for different devices in the same space. Optionally, the CPE and the existing router in the home may be arranged in a same space of the home, and simultaneously provide the Wi-Fi signals for a same device (a device having a dual Wi-Fi function) in the space.

It can be learned from the foregoing descriptions that, in this embodiment of this application, through mode switching of a Wi-Fi chip in an IoT device with a built-in eSIM, the IoT device with the built-in eSIM has a capability of connecting to a router, so that profile data can be downloaded from an SM-DP+ server based on a wireless connection between the router and the SM-DP+ server. Compared with the conventional technology in which the profile data is downloaded through a data path established by using a Bluetooth chip, in this embodiment of this application, a Bluetooth chip that is configured to download the profile data only does not need to be deployed in the IoT device that has no Bluetooth application scenario. This reduces device costs. In addition, default profile does not need to be preset in the eSIM. This reduces costs of a supplier for providing the default profile. In addition, the Wi-Fi chip can automatically perform mode switching, thereby reducing user operations and improving user experience. In addition, compared with the scenario 1, traffic of the terminal device is reduced.

### Scenario 3

Refer to FIG. 3 again. Like the scenario 1, the scenario 3 in this embodiment of this application is a scenario in which there is no router in a home, and one CPE may be purchased and added to the home as a router, to provide Wi-Fi signals for terminal devices such as a television and a mobile phone. Refer to descriptions in the foregoing scenario 1. Details are not described herein again.

For example, subscription between an operator and an eSIM in the CPE may be first performed. For example, for a process of subscription between the operator and the eSIM in the CPE, refer to FIG. 4 again and descriptions in the foregoing scenario 1. Details are not described herein again.

For example, for a manner in which the mobile phone obtains activation information after successful subscription between the operator and the eSIM in the CPE, refer to descriptions in the foregoing scenario 1. Details are not described herein again.

For example, the mobile phone may establish a connection to the CPE, and then the mobile phone sends the activation information to the CPE.

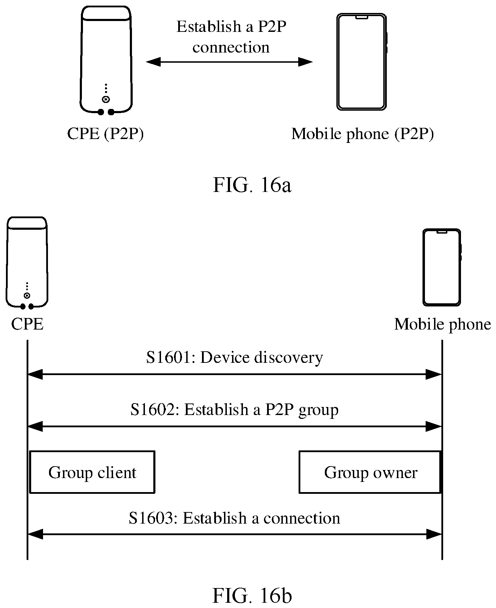

FIG. 16a is a schematic diagram of an example of device pairing. For example, both the CPE and the mobile phone have a Wi-Fi direct function, and both the CPE and the mobile phone may serve as a P2P (Peer to Peer, peer to peer) device. Refer to FIG. 16a. The CPE may establish a Wi-Fi P2P connection (namely, Wi-Fi direct, which is briefly referred to as a P2P connection below) to the mobile phone.

For example, a Wi-Fi chip in the CPE includes a plurality of modes, and a default mode of the Wi-Fi chip in the CPE is a Wi-Fi direct mode. Therefore, a mode of the Wi-Fi chip does not need to be switched. In this case, the CPE may serve as a P2P device.

For example, a Wi-Fi chip in the mobile phone alternatively includes a plurality of modes, and a mode of the Wi-Fi chip in the mobile phone depends on user setting. In a possible implementation in which the mode of the Wi-Fi chip in the mobile phone is set as a P2P mode, a user taps a Huawei Share application on a home screen of the mobile phone, and the mobile phone displays a setting interface of the Huawei Share application in response to operation behavior of the user. One or more controls are included on the setting interface of the Huawei Share application, including but not limited to a Huawei Share status setting option and a projection setting option. The user slides an on/off button of the Huawei Share status setting option. In response to operation behavior of the user, the mobile phone configures the Huawei share to be an enabled state. In this case, the mobile phone may serve as a P2P device.

For example, the Wi-Fi direct mode and an AP mode of the Wi-Fi chip in the CPE may coexist. For example, the Wi-Fi chip in the CPE may simultaneously perform signaling interaction with another terminal device on different channels, to implement coexistence of the Wi-Fi direct mode and the AP mode.

For example, when the Wi-Fi direct mode and the AP mode of the Wi-Fi chip in the CPE coexist, if the user sets the mode of the Wi-Fi chip in the mobile phone as a STA mode in the manner described in the foregoing scenario 1, the CPE serve an AP device, and the CPE establishes a Wi-Fi connection to the mobile phone, that is, the case described in the foregoing scenario 1 or scenario 2. If the user sets the mode of the Wi-Fi chip in the mobile phone as the Wi-Fi direct mode in the manner described in the scenario 3, the CPE serves as a P2P device, and then the CPE establishes the P2P connection to the mobile phone, that is, the case described in the scenario 3.

FIG. 16b is a schematic diagram of an example of a communication process. Refer to FIG. 16b. For example, a process of establishing the P2P connection between the CPE and the mobile phone may be as follows:
S1601: The CPE performs device discovery with the mobile phone.
S1601a: The CPE sends a probe request message to the mobile phone.

For example, the CPE broadcasts the probe request message. The CPE broadcasts the probe request message on an available channel (for example, a channel 1 to a channel 13) on a 2.4 GHz frequency band and all available channels (for example, a channel 36 to a channel 165) on a 5 GHz frequency band, to probe a device operating on a corresponding channel.

For example, the mobile phone works on a channel 40 on the 5 GHz frequency band. For example, the mobile phone may receive the probe request message broadcast by the CPE on the channel 40 on the 5 GHz frequency band.

S1601b: The mobile phone sends a probe response (probe response) message to the CPE.

For example, the mobile phone receives the probe request message sent by the CPE, and sends the probe response message to the P2P device on a channel 40.

S1602: The CPE establishes a P2P group to the mobile phone.

S1602a: The CPE sends a GO negotiation request (GO negotiation request) message to the mobile phone.

For example, after discovering that a mobile phone supporting a P2P function exists around the CPE, the CPE may establish a P2P Group to the mobile phone, and negotiate who plays a GO (Group Owner, group owner) and who plays a GC (Group Client, group member).

For example, a function of the GO is similar to that of an access point AP (Access Point) in a basic service set BSS (Basic Service Set), and the GO may also be referred to as a base station. A function of the GC is similar to that of a station (Station, STA) in the BSS, and the station may support a plurality of wireless local area network (wireless local area network, WLAN) standards of the 802.11 family, such as 802.11be, 802.11ax, 802.11ac, 802.11n, 802.11g, 802.11b, and 802.11a. The access point may also be a device that supports a plurality of WLAN standards of the 802.11 family, such as 802.11be, 802.11ax, 802.11ac, 802.11n, 802.11g, 802.11b, and 802.11a.

For example, in response to the received probe response message from the mobile phone, the CPE sends the GO negotiation request message to the mobile phone on the channel 40, to negotiate a role of the P2P Group with the mobile phone.

S1602b: The mobile phone sends a GO negotiation response (GO negotiation response) message to the CPE.

For example, the mobile phone sends the GO negotiation response message to the CPE on the channel 40 in response to the received GO negotiation request message from the CPE.

S1602c: The CPE sends a GO confirm (GO confirm) message to the mobile phone.

It should be noted that, three frame exchanges in S16021 to S16023 are used to exchange information, to determine the GO and the GC, and the information exchanged in the three frame exchanges includes but is not limited to: information such as a MAC address and a Group ID of the GO. For a specific negotiation process, refer to detailed description in the 802.11 protocol. Details are not described herein again.

In descriptions of this embodiment of this application, an example in which the mobile phone is a GO and the CPE is a GC is used for description.

S1603: The CPE establishes a connection to the mobile phone.

S1603a: The mobile phone sends a beacon (beacon) message to the CPE.

For example, after the mobile phone completes group establishment to the CPE, the mobile phone may send the beacon message (broadcast message) (which may also be referred to as a beacon frame) as a GO end, to establish a Wi-Fi connection (which may be referred to as a P2P connection) to another device on the 5 GHz frequency band.

S1603b: The CPE performs link authentication and association with the mobile phone.

For example, after the CPE obtains, on the channel 40 through listening, the beacon message sent by the mobile phone, the CPE performs a link authentication and association process with the mobile phone. In the link authentication and association process, a plurality of frame exchanges are needed to exchange information for establishing the Wi-Fi connection. For example, the information needed for the Wi-Fi connection includes a pre-encryption key and Wi-Fi capability information. The Wi-Fi capability information includes but is not limited to information such as MAC address information, a supported channel set, and a modulation scheme. A specific concept is described in detail below.

S1603c: The CPE performs a 4-way handshake (4-way handshake) with the mobile phone.

For example, after the CPE performs the 4-way handshake with the mobile phone, the Wi-Fi connection is successfully established on the channel 40, in other words, the CPE and the mobile phone may exchange data based on the Wi-Fi connection.

For example, in a 4-way handshake process, the CPE and the mobile phone may negotiate an encryption key for data transmission.

It should be noted that the process of establishing the P2P connection in FIG. 16b is merely an example, and a process of performing Wi-Fi communication between the CPE and the mobile phone may include more frame exchange processes than that in FIG. 16b. For information carried in each frame and a format and a function of each frame, refer to descriptions in an existing standard. Details are not described again in this application.

It should be noted that a sequence in which the mobile phone obtains the activation information and establishes the P2P connection to the CPE is not limited in embodiments of this application.

For example, after the mobile phone establishes the P2P connection to the CPE, the mobile phone may send the activation information to the CPE based on the P2P connection. For a process in which the mobile phone sends the activation information, refer to FIG. 6(1) to FIG. 8(1) and FIG. 8(2) again and descriptions in the foregoing scenario 1. Details are not described herein again. It should be noted that, compared with the scenario 1, in the scenario 3, when the user taps an activation information obtaining option 803 in FIG. 8(2), in response to operation behavior of the user, the mobile phone sends the activation information to the CPE based on the P2P connection, without a need to send AP information.

For example, after the CPE establishes the P2P connection to the mobile phone, the CPE and the mobile phone can share data with each other. In other words, the CPE can send the data to the mobile phone based on the P2P connection, and the mobile phone can also send the data to the CPE based on the P2P connection. Therefore, after obtaining the activation information, the CPE can also download profile data based on a wireless connection between the mobile phone and a network, without a need to perform mode switching or re-establish a connection to the mobile phone.

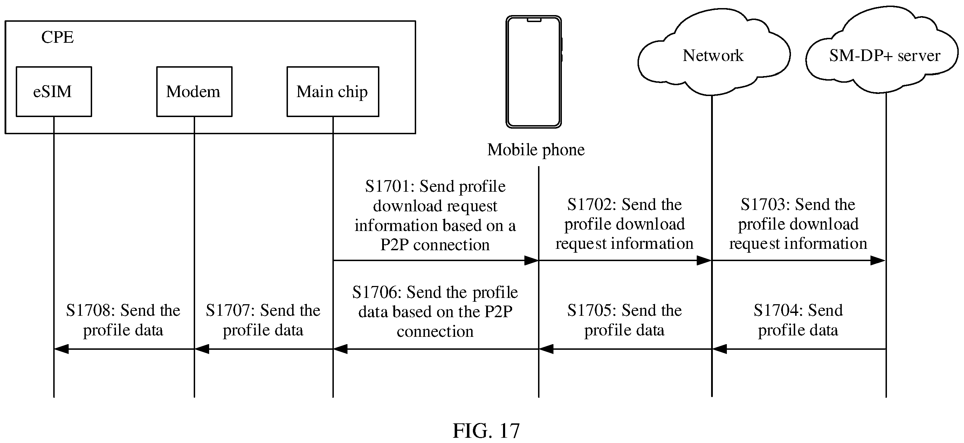

FIG. 17 is a schematic diagram of an example of a data exchange process. The P2P connection is established between the CPE and the mobile phone, and a wireless connection (for example, a 5G connection) is established between the mobile phone and an SM-DP+ server.

S1701: A main chip sends profile download request information to the mobile phone based on the P2P connection.

For example, the main chip may indicate a modem to obtain an eID from the eSIM through an SCI interface, and then the main chip may generate the profile download request information based on the obtained eID of the eSIM and the activation information, where the profile download request information includes the eID and the activation information.

For example, if the activation information does not include a label of the profile data, the profile download request information carries the eID and an address of the SM-DP+ server. For example, if the activation information includes a label of the profile data, the profile download request information carries the eID, the label of the profile data, and an address of the SM-DP+ server.

For example, an LPA is preset in a memory, and the LPA may be used to forward the profile download request information and the profile data. For example, the main chip includes a processor, and the processor in the main chip may be configured to run the LPA. For example, the processor of the main chip may run the LPA, so that the LPA obtains the address of the SM-DP+ server from the profile download request information (to subsequently determine whether the received data is the profile data), and sends the profile download request information to the mobile phone based on the P2P connection between the CPE and the mobile phone.

S1702: The mobile phone sends the profile download request information to the network.

For example, after receiving the profile download request information, the mobile phone passes through the profile download request information to the network based on the wireless connection (for example, a 5G connection) between the mobile phone and the network.

S1703: The network sends the profile download request information to the SM-DP+ server.

For example, after receiving the profile download request information, the network sends the profile download request information to the SM-DP+ server.

S1704: The SM-DP+ server sends profile download data to the network.

For example, after receiving the profile download request information, the SM-DP+ server may parse the profile download request information.

For example, if the profile download request information carries the eID, the SM-DP+ server may extract the eID from the profile download request information. Then, the SM-DP+ server may search, based on the eID extracted from the profile download request information, an association relationship established when the profile data is generated, determine the corresponding profile data, and return the profile data to the network.

For example, if the profile download request information carries the eID and the label of the profile data, the SM-DP+ server may extract the eID and the label of the profile data from the profile download request information. Then, the SM-DP+ server may search, based on the eID extracted from the profile download request information, an association relationship established when the profile data is generated, determine the corresponding profile data, and compare the label that is of the profile data and that is extracted from the profile download request information with the label that is of the profile data that is searched based on the eID. If two labels are consistent, the profile data is returned to the network. Then, data security is improved through secondary verification.

S1705: The network sends the profile data to the mobile phone.

For example, after receiving the profile data, the network returns the profile data to the mobile phone based on the wireless connection (for example, the 5G connection) between the mobile phone and the network.

S1706: The mobile phone sends the profile data to the main chip based on the P2P connection.

For example, after receiving the profile data, the mobile phone may pass through the profile data to the CPE based on the P2P connection between the mobile phone and the CPE.

For example, the data sent by the mobile phone may reach the main chip in the CPE through an antenna and the Wi-Fi chip.

S1707: The main chip sends the profile data to the modem.

S1708: The modem sends the profile data to the eSIM.

For example, S1707 and S1708 may be similar to S1107 and S1108 in the foregoing scenario 1. Details are not described herein again.

For example, after the main chip sends the profile data to the eSIM, the main chip in the CPE may access the network by using the modem and the eSIM. After the CPE successfully accesses the network by using the eSIM, the wireless connection (for example, a 5G connection) may be established between the CPE and the network, so that the CPE can serve as a router.

Refer to FIG. 12 again. After the CPE can serve as a router, the CPE may be added to the home as a new router, to provide the Wi-Fi signals for the terminal devices such as the mobile phone and the television in the home.

It can be learned from the foregoing descriptions that, in this embodiment of this application, an IoT device with a built-in eSIM is used to establish a P2P connection to a terminal device in a Wi-Fi direct mode, so that profile data can be downloaded from an SM-DP+ server based on a wireless connection (for example, a 5G connection) between the terminal device and a network. Compared with the conventional technology in which the profile data is downloaded through a data path established by using a Bluetooth chip, in this embodiment of this application, a Bluetooth chip that is configured to download the profile data only does not need to be deployed in the IoT device that has no Bluetooth application scenario. This reduces device costs. In addition, default profile does not need to be preset in the eSIM. This reduces costs of a supplier for providing the default profile. Compared with the scenario 1 and the scenario 2, in the scenario 3, neither the CPE nor the mobile phone need to perform mode switching. This reduces complexity of user operations, improves user experience, and can improve efficiency of downloading the profile data by the CPE.

### Scenario 4

Refer to FIG. 13 again. Like the scenario 2, the scenario 4 in this embodiment of this application is a scenario in which there is a router in a home, and CPE is added to the home as a router, to replace the existing router in the home, and provide Wi-Fi signals for terminal devices such as a television and a mobile phone, or a scenario in which CPE is added to a home as a router, and the CPE and a router simultaneously provide Wi-Fi signals for terminal devices such as a television and a mobile phone. Refer to descriptions in the foregoing scenario 2. Details are not described herein again.

For example, subscription between an operator and an eSIM in the CPE may be first performed. For example, if a user performs subscription between the operator and the eSIM in the CPE in an operator store, for a process of subscription between the operator and the eSIM in the CPE, refer to FIG. 4 again and descriptions in the foregoing scenario 1. Details are not described herein again. For example, if the user performs subscription between the operator and the eSIM in the CPE in the operator store, the mobile phone may obtain activation information by scanning a quick-response code. For details, refer to descriptions in the foregoing scenario 1. Details are not described herein again.

For example, if the user performs subscription between the eSIM in the CPE and the operator on a subscription interface of the mobile phone, for a process of subscription between the eSIM in the CPE and the operator and a process of obtaining the activation information by the mobile phone, refer to descriptions in the foregoing scenario 2. Details are not described herein again.

For example, the CPE may establish a P2P connection to the mobile phone, and then the mobile phone may send the activation information to the CPE based on the P2P connection. For establishment of the P2P connection between the CPE and the mobile phone, refer to FIG. 16a, FIG. 16b, and descriptions in the foregoing scenario 3. Details are not described herein again.

It should be noted that a sequence in which the mobile phone obtains the activation information and establishes the P2P connection to the CPE is not limited in embodiments of this application.

For example, after the mobile phone establishes the P2P connection to the CPE, the mobile phone may send the activation information to the CPE based on the P2P connection. For a process in which the mobile phone sends the activation information, refer to FIG. 6(1) to FIG. 8(2) again and descriptions in the foregoing scenario 1. Details are not described herein again. It should be noted that, compared with the scenario 1, in the scenario 3, when the user taps an activation information obtaining option 803 in FIG. 8(2), in response to operation behavior of the user, the mobile phone sends the activation information to the CPE based on the P2P connection, without a need to send AP information.

For example, after the CPE establishes the P2P connection to the mobile phone, the CPE and the mobile phone can share data with each other. In other words, the CPE can send the data to the mobile phone based on the P2P connection, and the mobile phone can also send the data to the CPE based on the P2P connection. Therefore, after obtaining the activation information, the CPE can also download profile data based on a wireless connection between the mobile phone and a network, without a need to perform mode switching or re-establish a connection to the mobile phone.

For example, while keeping the P2P connection to the CPE, the mobile phone may further establish a Wi-Fi connection to the router. For a process in which the mobile phone establishes the Wi-Fi connection to the router, refer to FIG. 5a and FIG. 5b. In this case, the mobile phone is a STA, the router is an AP, and the mobile phone accesses the router to establish the Wi-Fi connection.

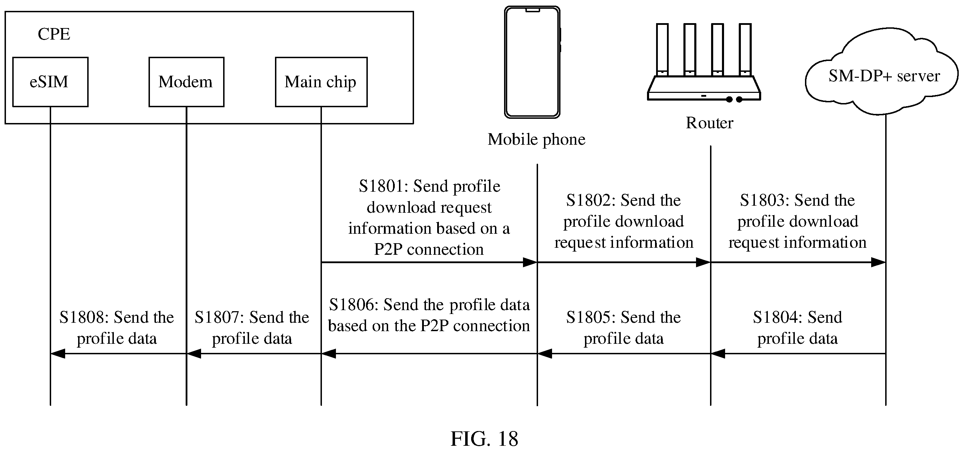

FIG. 18 is a schematic diagram of an example of a data exchange process. The P2P connection is established between the CPE and the mobile phone, the Wi-Fi connection is established between the mobile phone and the router, and a wireless connection is established between the router and an SM-DP+ server.

S1801: A main chip sends profile download request information to the mobile phone based on the P2P connection.

For example, for S1801, refer to descriptions of S1701 in the foregoing scenario 3. Details are not described herein again.

S1802: The mobile phone sends the profile download request information to the router.

For example, after receiving the profile download request information, the mobile phone passes through the profile download request information to the router based on the Wi-Fi connection established between the mobile phone and the router.

S1803: The router sends the profile download request information to the SM-DP+ server.

For example, after receiving the profile download request information, the router forwards the profile download request information to the SM-DP+ server.

S1804: The SM-DP+ server sends the profile data to the router.

For example, after receiving the profile download request information, the SM-DP+ server may parse the profile download request information.

For example, if the profile download request information carries an eID, the SM-DP+ server may extract the eID from the profile download request information. Then, the SM-DP+ server may search, based on the eID extracted from the profile download request information, an association relationship established when the profile data is generated, determine the corresponding profile data, and return the profile data to the router.

For example, if the profile download request information carries an eID and a label of the profile data, the SM-DP+ server may extract the eID and the label of the profile data from the profile download request information. Then, the SM-DP+ server may search, based on the eID extracted from the profile download request information, an association relationship established when the profile data is generated, determine the corresponding profile data, and compare the label that is of the profile data and that is extracted from the profile download request information with the label that is of the profile data that is searched based on the eID. If two labels are consistent, the profile data is returned to the router. Then, data security is improved through secondary verification.

S1805: The router sends the profile data to the mobile phone.

For example, after receiving the profile data, the router forwards the profile data to the mobile phone based on the Wi-Fi connection established between the router and the mobile phone.

S1806: The mobile phone sends the profile data to the main chip based on the P2P connection.

After receiving the profile data, the mobile phone passes through the profile data to the CPE based on the P2P connection established between the mobile phone and the CPE.

For example, the data sent by the mobile phone may reach the main chip in the CPE through an antenna and a Wi-Fi chip.

S1807: The main chip sends the profile data to a modem.

S1808: The modem sends the profile data to the eSIM.

For example, S1807 and S1808 may be similar to S1107 and S1108 in the foregoing scenario 1. Details are not described herein again.

For example, after the main chip sends the profile data to the eSIM, the main chip in the CPE may access the network by using the modem and the eSIM. After the CPE successfully accesses the network by using the eSIM, a wireless connection (for example, a 5G connection) may be established between the CPE and the network, so that the CPE can serve as a router.

Refer to FIG. 12 again. In a possible implementation, after the CPE can serve as a router, the CPE may be added to the home as a new router, to replace the existing router in the home, and provide the Wi-Fi signals for the terminal devices such as the mobile phone and the television in the home.

In a possible implementation, the CPE may alternatively be added to the home as a new router, and the existing router in the home is still used. Further, both the CPE and the existing router in the home may provide the Wi-Fi signals for the terminal devices such as the mobile phone and the television. Optionally, the CPE and the existing router in the home may be deployed in different spaces of the home, to provide the Wi-Fi signals for devices in the different spaces. Optionally, the CPE and the existing router in the home may be deployed in a same space of the home, to provide the Wi-Fi signals for different devices in the same space. Optionally, the CPE and the existing router in the home may be arranged in a same space of the home, and simultaneously provide the Wi-Fi signals for a same device (a device having a dual Wi-Fi function) in the space.

It can be learned from the foregoing descriptions that, in this embodiment of this application, an IoT device with a built-in eSIM is used to establish a P2P connection to a terminal device in a Wi-Fi direct mode, so that profile data can be downloaded from an SM-DP+ server based on a Wi-Fi connection between the terminal device and a router and a wireless connection between the router and the SM-DP+ server. Compared with the conventional technology in which the profile data is downloaded through a data path established by using a Bluetooth chip, in this embodiment of this application, a Bluetooth chip that is configured to download the profile data only does not need to be deployed in the IoT device that has no Bluetooth application scenario. This reduces device costs. In addition, default profile does not need to be preset in the eSIM. This reduces costs of a supplier for providing the default profile. Compared with the scenario 1 and the scenario 2, in the scenario 4, neither the CPE nor the mobile phone need to perform mode switching. This reduces complexity of user operations, improves user experience, and can improve efficiency of downloading the profile data by the CPE. In addition, compared with the scenario 1 and the scenario 3, traffic of the terminal device can be reduced in the scenario 4.

### Scenario 5

In a possible implementation, a built-in eSIM is disposed in CPE, and a SIM card interface for inserting a physical SIM card is disposed.

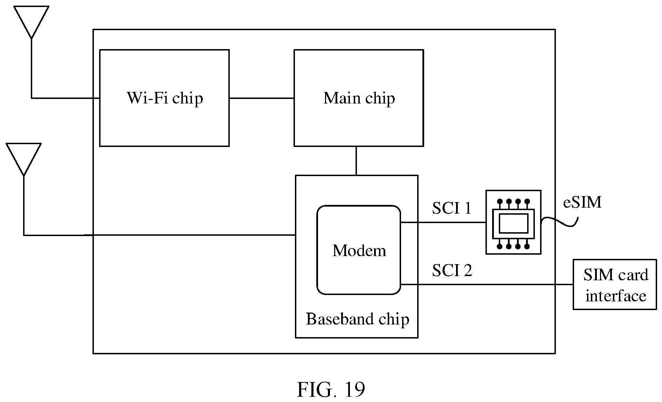

FIG. 19 is a schematic diagram of an example of a hardware structure of an IoT device. It should be understood that the IoT device shown in FIG. 19 is only an example of the IoT device, and the IoT device may have more or fewer components than those shown in the figure.

Refer to FIG. 19. For example, the IoT device may be CPE, and the CPE includes a Wi-Fi chip, a main chip, a baseband chip, an eSIM, a SIM card interface, and an antenna.

For example, the baseband chip includes a modem, and the baseband chip is separately coupled to the main chip and the antenna.

For example, the modem is provided with at least two SCI interfaces: an SCI 1 and an SCI 2. The eSIM is provided with an SCI, and the SCI interface of the eSIM is coupled to the SCI 1 interface of the modem. The SIM card interface is coupled to the SCI 2 interface of the modem.

For example, the Wi-Fi chip is separately coupled to the antenna and the main chip.

For example, the Wi-Fi chip, the main chip, the baseband chip, and the eSIM may be independent of each other, or may be integrated onto a same chip. This is not limited in embodiments of this application.

For example, after a physical SIM card is inserted into the SIM card interface, the physical SIM card and the eSIM share the modem. The modem can access a network each time by using only the physical SIM card or the eSIM.

For example, the CPE further includes a memory. A driver corresponding to an SCI is preconfigured in the memory, and the driver is configured to drive the SCI interface. The modem may drive the SCI interface by running the driver, and send and receive data through the SCI interface. For example, the eSIM may drive the SCI interface by running the driver, and send and receive data through the SCI interface. Further, the eSIM and the modem may exchange data through the SCI interface.

For example, a management program is preconfigured in the memory, and the management program is configured to manage the eSIM. The modem may run the management program to exchange data with the eSIM through the SCI1 interface, and exchange data with the physical SIM card through the SCI2.

For example, the CPE further includes a power module. After the CPE is started, the modem may control the power module to simultaneously power on the eSIM and the physical SIM card.

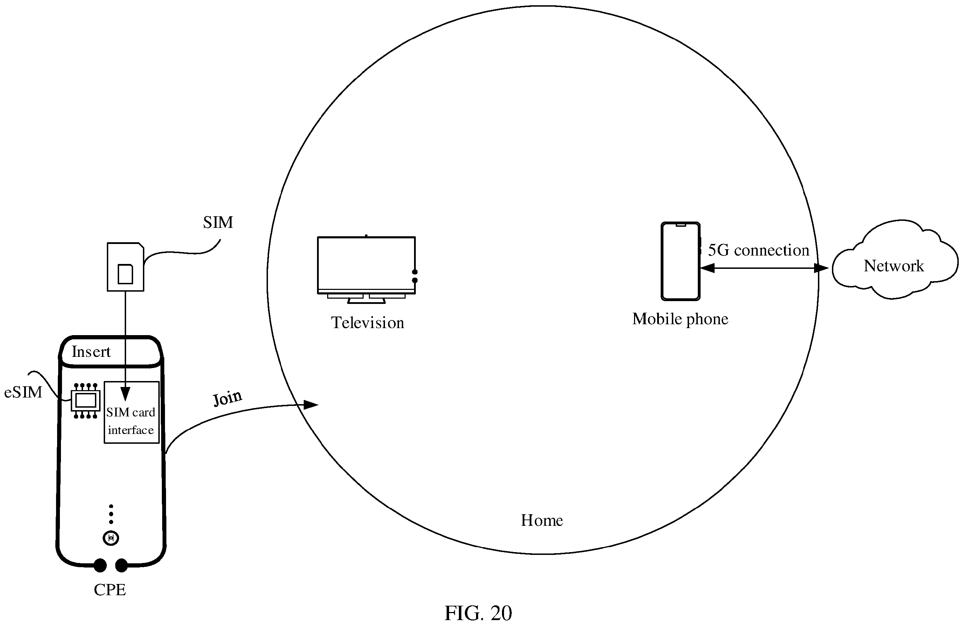

FIG. 20 is a schematic diagram of an example of an application scenario. As shown in FIG. 20, terminal devices such as a television and a mobile phone are deployed in a home, but no router is deployed. The terminal devices such as the television and the mobile phone each have a Wi-Fi function. When Wi-Fi signals need to be provided for the terminal devices such as the television and the mobile phone, one CPE may be purchased, and a physical SIM card is inserted into the CPE, so that an eSIM in the CPE can download profile through a cellular data path of the physical SIM card. Then, the CPE is added to the home as a router to provide the Wi-Fi signals for the television and the mobile phone. In addition, the mobile phone also has a cellular function, and there may be a wireless connection (for example, a 5G (5th Generation Mobile Communication Technology, 5th generation mobile communication technology) connection) between the mobile phone and the network (including a base station and a core network), so that the mobile phone and the network can exchange data based on the wireless connection.

It should be understood that FIG. 20 shows only some terminal devices in the home, and other terminal devices (such as a speaker, a tablet computer, and a notebook computer) may be further included in the home. This is not limited in embodiments of this application. In addition to 5G, the mobile phone can further support 3G, 4G, 6G, and the like. This is not limited in embodiments of this application. Therefore, a connection between the mobile phone and the network may alternatively be a 3G connection, a 4G connection, a 6G connection, or the like.

In a possible implementation, a physical SIM card may be removed from a terminal device (for example, a mobile phone or a tablet computer) and inserted into the CPE.

In a possible implementation, an idle physical SIM card in a home may be inserted into the CPE.

In a possible implementation, a physical SIM card is newly purchased, and the physical SIM card purchased for the home is inserted into the CPE.

It should be noted that the physical SIM card inserted into the CPE may register with the network.

For example, subscription between an operator and the eSIM in the CPE may be first performed. For example, for a process of subscription between the operator and the eSIM in the CPE, refer to FIG. 4 again and descriptions in the foregoing scenario 1. Details are not described herein again.

For example, for a process in which the mobile phone obtains activation information after successful subscription between the operator and the eSIM in the CPE, refer to descriptions in the foregoing scenario 1. Details are not described herein again.

For example, the mobile phone may establish a connection to the CPE, and then the mobile phone sends the activation information to the CPE. It should be noted that a sequence in which the mobile phone obtains the activation information and establishes a connection to the CPE is not limited in embodiments of this application.

For example, the CPE may establish a Wi-Fi connection to the mobile phone. For a process in which the CPE establishes the Wi-Fi connection to the mobile phone, refer to FIG. 5a to FIG. 5b again and descriptions in the foregoing scenario 1. Details are not described herein again. After the mobile phone establishes the Wi-Fi connection to the CPE, the mobile phone may send the activate information to the CPE based on the Wi-Fi connection. For a process in which the mobile phone sends the activation information, refer to FIG. 6(1) to FIG. 8(2) again and descriptions in the foregoing scenario 1. Details are not described herein again. It should be noted that, compared with the scenario 1, in the scenario 5, when a user taps an activation information obtaining option 803 in FIG. 8(2), in response to operation behavior of the user, the mobile phone sends the activation information to the CPE based on the Wi-Fi connection, without a need to send AP information.

For example, the CPE may establish a P2P connection to the mobile phone. For a process in which the CPE establishes the P2P connection to the mobile phone, refer to FIG. 16a and FIG. 16b again and descriptions in the foregoing scenario 3. Details are not described herein again. After the mobile phone establishes the P2P connection to the CPE, the mobile phone may send the activation information to the CPE based on the P2P connection. For details, refer to descriptions in the foregoing scenario 3. Details are not described herein again.

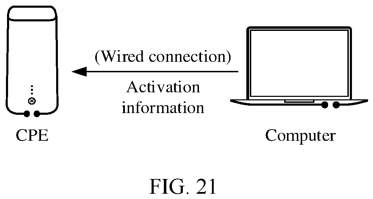

FIG. 21 is a schematic diagram of an example of data exchange. Refer to FIG. 21. For example, the CPE is provided with a network interface, and the CPE may be connected to a computer through a network cable. In a possible implementation, the user may log in to a subscription website to download the activation information, and perform an operation of sending the activation information. In response to operation behavior of the user, the computer sends the activation information to the CPE through the network cable. Optionally, the user may further perform subscription between the eSIM in the CPE and an operator server on the subscription website.

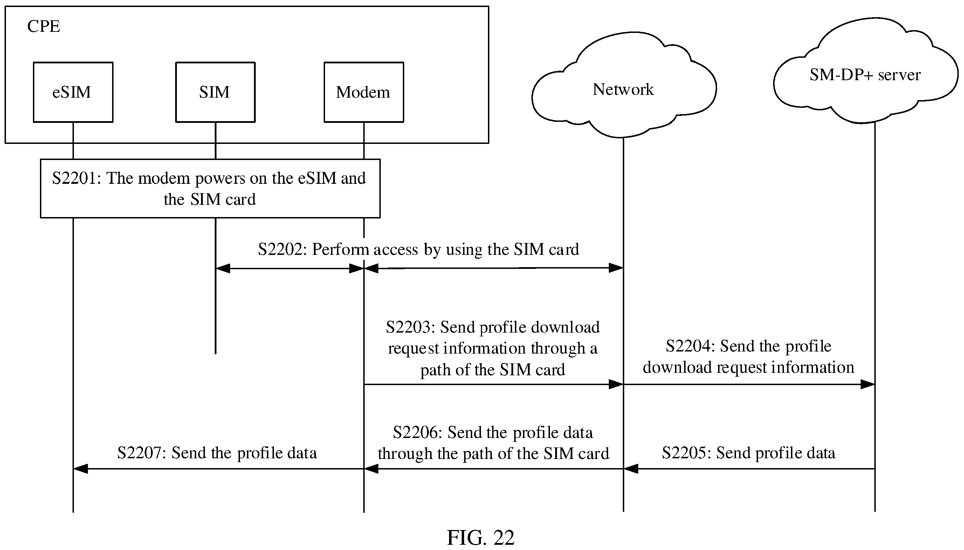

FIG. 22 is a schematic diagram of an example of a data exchange process.

S2201: The modem powers on the eSIM and the physical SIM card.

After the CPE is powered on, the modem can drive the power module to power on the eSIM and the physical SIM card.

S2201a: The modem powers on the eSIM.

S2201b: The modem powers on the physical SIM card.

There is no sequence between S2201a and S2201b.

In a possible implementation, S2201a and S2201b may be simultaneously performed, and the modem may drive the power module to simultaneously power on the eSIM and the physical SIM card.

In a possible implementation, S2201a may be performed before S2201b, and the modem may drive the power module to sequentially power on the eSIM and the physical SIM card.

In a possible implementation, S2201b may be performed before S2201a, and the modem may drive the power module to sequentially power on the physical SIM card and the eSIM.

S2202: The modem accesses a network by using the physical SIM card.

For example, after powering on the eSIM and the physical SIM card, the modem may access the network by using the physical SIM card, so that the CPE establishes a data path for downloading profile data of the eSIM.

For example, after the physical SIM card accesses the network, the CPE may establish a 5G connection to the network.

For example, an execution sequence of sending the activation information by the mobile phone, and of S2201 and S2202 is not limited in embodiments of this application.

S2203: The modem sends profile download request information to the network through a path of the physical SIM card.

For example, after receiving the activation information, the main chip in the CPE may generate the profile download request information. For example, the main chip may indicate the modem to obtain an eID from the eSIM through the SCI, and then the main chip may generate the profile download request information based on the obtained eID of the eSIM and the activation information, where the profile download request information includes the eID and the activation information.

For example, if the activation information does not include a label of the profile data, the profile download request information carries the eID and an address of an SM-DP+ server. For example, if the activation information includes a label of the profile data, the profile download request information carries the eID, the label of the profile data, and an address of an SM-DP+ server.

For example, an LPA is preset in the memory, and the LPA may be used to forward the profile download request information and the profile data.

In a possible manner, the modem may be configured to run the LPA. For example, the main chip may send the profile download request information to the modem, and then the modem runs the LPA, so that the LPA obtains the address of the SM-DP+ server from the profile download request information (to subsequently determine whether the received data is the profile data), and sends the profile download request information to the network through a data path of the physical SIM card.

In a possible manner, a processor of the main chip may be configured to run the LPA. For example, the processor of the main chip may run the LPA, so that the LPA obtains the address of the SM-DP+ server from the profile download request information (to subsequently determine whether the received data is the profile data), and sends the profile download request information to the network through a data path of the physical SIM card.

S2204: The network sends the profile download request information to the SM-DP+ server.

For example, after receiving the profile download request information, the network may send the profile download request information to the SM-DP+ server based on a wireless connection between the network and the SM-DP+ server.

S2205: The SM-DP+ server returns the profile data to the network.

After receiving the profile download request information, the SM-DP+ server may parse the profile download request information.

For example, if the profile download request information carries the eID, the SM-DP+ server may extract the eID from the profile download request information. Then, the SM-DP+ server may search, based on the eID extracted from the profile download request information, an association relationship established when the profile data is generated, determine the corresponding profile data, and return the profile data to the network.

For example, if the profile download request information carries the eID and the label of the profile data, the SM-DP+ server may extract the eID and the label of the profile data from the profile download request information. Then, the SM-DP+ server may search, based on the eID extracted from the profile download request information, an association relationship established when the profile data is generated, determine the corresponding profile data, and compare the label that is of the profile data and that is extracted from the profile download request information with the label that is of the profile data that is searched based on the eID. If two labels are consistent, the profile data is returned to the network. Then, data security is improved through secondary verification.

S2206: The network sends the profile data to the modem through the path of the physical SIM card.

For example, after receiving the profile data, the network returns the profile data to the CPE based on the 5G connection established between the network and the CPE.

For example, the data sent by the network reaches the modem through the antenna.

S2207: The modem sends the profile data to the eSIM.

In a possible manner, if the modem is configured to run the LPA, after the modem receives the data returned by the network, the modem may run the LPA, so that the LPA determines whether the data received by the modem is the profile data. For example, the LPA may extract a source IP address (Internet Protocol Address, Internet protocol address) from the data received by the modem, and then compare the source IP address with the address of the SM-DP+ server to determine whether the data received by the modem is the profile data.

For example, if the source IP address is the same as the address of the SM-DP+ server, it may be determined that the data received by the modem is the profile data. In this case, the LPA may invoke the management program to send forwarding information that includes the profile data to the eSIM through an SCI interface (for example, the SCI 1) of the eSIM, so that the profile data can be forwarded to the eSIM.

For example, if the source IP address is different from the address of the SM-DP+ server, it may be determined that the data received by the modem is not the profile data. In this case, the LPA may notify another program of the modem, and the another program of the modem sends the data to the main chip.

In a possible manner, if the processor of the main chip is configured to run the LPA, after the modem receives the data returned by the network, the modem may send the data to the main chip. Then, the processor of the main chip runs the LPA, and the LPA determines whether the data received by the main chip is the profile data. For example, the LPA may extract a source IP address (Internet Protocol Address, Internet protocol address) from the data received by the main chip, and then compare the source IP address with the address of the SM-DP+ server to determine whether the data received by the main chip is the profile data.

For example, if the source IP address is the same as the address of the SM-DP+ server, it may be determined that the data received by the main chip is the profile data. In this case, the LPA may send forwarding information that includes the profile data to the modem, where the forwarding information indicates to forward the profile data to the eSIM. After receiving the forwarding information, the modem may run the management program, and the management program sends the forwarding information to the eSIM through the SCI (for example, the SCI 1) interface with the eSIM, so that the profile data is forwarded to the eSIM.

For example, if the source IP address is different from the address of the SM-DP+ server, it may be determined that the data received by the main chip is not the profile data. In this case, the processor of the main chip may run another program to process the data.

For example, after receiving the profile data, the eSIM may return a profile data receive success response to the management program, and the management program returns the profile data receive success response to the LPA. If the processor of the main chip is configured to run the LPA, after the LPA receives the profile data receive success response sent by the management program, the main chip may determine that the eSIM has received the profile data. If the modem is configured to run the LPA, the LPA may send a message to the main chip, where the message is used to notify the main chip that the eSIM has received the profile data.

For example, after determining that the eSIM has received the profile data, the main chip may access the network by using the modem and the eSIM. After the CPE successfully accesses the network by using the eSIM, the CPE may establish the 5G connection to the network, and then the CPE may serve as a router.

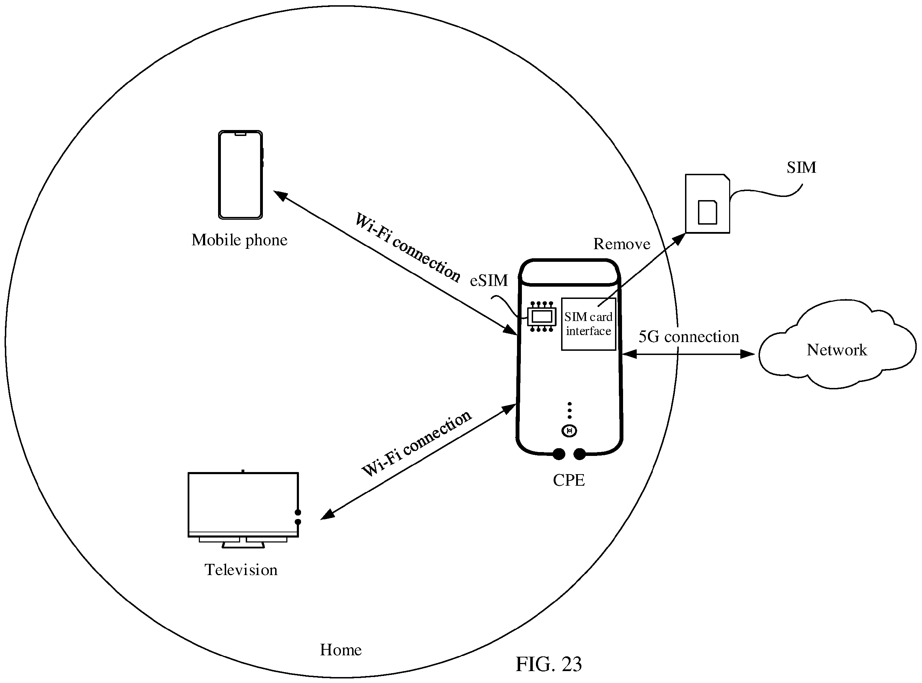

FIG. 23 is a schematic diagram of an example of an application scenario.

Refer to FIG. 23. For example, after CPE can serve as a router, a physical SIM card may be removed from the CPE, and then the CPE is added to a home as a router. After the CPE joins the home, a user may separately perform a Wi-Fi connection operation on terminal devices such as a mobile phone and a television. Correspondingly, the terminal devices such as the mobile phone and the television may separately establish a Wi-Fi connection to the CPE in response to operation behavior of the user. After the terminal devices such as the mobile phone and the television successfully establish the Wi-Fi connection to the CPE, the terminal devices such as the mobile phone and the television can be connected to a network.

In a possible implementation, if the physical SIM card is a physical SIM card of the terminal device, the physical SIM card may be removed from the CPE, and then inserted into the corresponding terminal device.

In a possible implementation, if the physical SIM card is an idle physical SIM card or a newly purchased physical SIM card, the physical SIM card may be removed from the CPE, or the physical SIM card may be retained in the CPE. When the terminal device needs to use the physical SIM card, the physical SIM card is removed from the CPE. For example, after a new mobile phone or a tablet computer is purchased, the physical SIM card is removed from the CPE and inserted into the new mobile phone or tablet computer. Then, the new mobile phone or tablet computer access the network by using the SIM card.

It should be understood that, when another terminal device having a Wi-Fi function still exists in the home, the user may connect, as required, the terminal device to the CPE to access a network. This is not limited in embodiments of this application.

For example, when the physical SIM card is not removed from the CPE, the CPE may access, as required, the network by using the eSIM or the physical SIM card.

For example, a management interface of Huawei CPE may further include a network connection option (for example, an eSIM network connection option and an SIM network connection option). If the user requires the CPE to access the network by using the eSIM, after the mobile phone establishes a connection to the CPE, the user may tap the eSIM network connection option, and the mobile phone sends a first network connection indication to the CPE in response to operation behavior of the user. After receiving the first network connection indication, the CPE may access the network by using the eSIM. If the user requires the CPE to access the network by using the physical SIM card, after the mobile phone establishes a connection to the CPE, the user may tap the SIM network connection option, and the mobile phone sends a second network connection indication to the CPE in response to operation behavior of the user. After receiving the second network connection indication, the CPE may access the network by using the physical SIM card.

It can be learned from the foregoing descriptions that this embodiment of this application may be applied to an IoT device having a dual-card usage scenario. One modem is used to power on both an eSIM and a SIM, and a physical SIM card is used to access a network, so that the eSIM of the IoT device can download profile data from an SM-DP+ server through a cellular data path of the physical SIM card. Compared with the scenarios 1 to 4, in the scenario 5, the IoT device can independently download the profile data, without a need to download the profile data by using another device (for example, a router, a mobile phone, and a tablet computer). In addition, there is no need to perform an operation on another device or establish a connection between the CPE and the another device, so that efficiency of downloading the profile data can be improved. Compared with the conventional technology in which the profile data is downloaded through a data path established by using a Bluetooth chip, in this embodiment of this application, a Bluetooth chip that is configured to download the profile data only does not need to be deployed in the IoT device that has no Bluetooth application scenario. This reduces device costs. In addition, default profile does not need to be preset in the eSIM. This reduces costs of a supplier for providing the default profile.

It may be understood that, to implement the foregoing functions, the electronic device includes corresponding hardware and/or software modules for executing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

An embodiment further provides a computer storage medium. The computer storage medium stores computer instructions. When the computer instructions are run on an electronic device, the electronic device is enabled to perform the related method steps, to implement the communication method in the foregoing embodiments.

An embodiment further provides a computer program product. When the computer program product runs on a computer, the computer is enabled to perform the related steps, to implement the communication method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the communication method in the foregoing method embodiments.

The electronic device, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on descriptions about the foregoing implementations, a person skilled in the art may understand that, for a purpose of convenient and brief description, division into the foregoing functional modules is used as an example for illustration. In an actual application, the foregoing functions may be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division during an actual implementation. For example, a plurality of units or components may be combined or integrated into another apparatus, or some features may be ignored or not performed. In addition, the displayed or discussed mutual couplings or direct couplings or communication connections may be implemented based on some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected based on actual requirements to achieve the objective of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content of the embodiments of this application and any content of a same embodiment may be freely combined. Any combination of the foregoing content shall fall within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A communication method, applied to a first electronic device, wherein the method comprises:
establishing, by the first electronic device, a first wireless fidelity Wi-Fi connection to a second electronic device, wherein establishment of the first Wi-Fi connection is triggered by sending, by the second electronic device, a first probe request to the first electronic device;
receiving, by the first electronic device based on the first Wi-Fi connection, activation information and wireless access point AP information that are sent by the second electronic device, wherein the activation information comprises an address of a subscription manager-data preparation SM-DP+ server;
establishing, by the first electronic device, a second Wi-Fi connection to a third electronic device based on the AP information, wherein establishment of the second Wi-Fi connection is triggered by sending, by the first electronic device, a second probe request to the third electronic device;
sending, by the first electronic device, operator profile download request information to the third electronic device based on the second Wi-Fi connection, wherein the profile download request information comprises the address of the SM-DP+ server, and the profile download request information indicates to download, from the SM-DP+ server, profile data of a built-in embedded subscriber identity module eSIM in the first electronic device;
receiving, by the first electronic device based on the second Wi-Fi connection, profile data sent by the third electronic device, wherein the profile data is received by the third electronic device from the SM-DP+ server; and
accessing, by the first electronic device based on the profile data, a network by using the eSIM.

2. The method according to claim 1, wherein the sending, by the first electronic device, a second probe request to the third electronic device comprises:
receiving, by the first electronic device, indication information sent by the second electronic device, wherein the indication information indicates the first electronic device to send a probe request; and
sending, by the first electronic device, the second probe request to the third electronic device in response to the indication information.

3. The method according to claim 1, wherein the sending, by the first electronic device, a second probe request to the third electronic device comprises:
sending, by the first electronic device, the second probe request to the third electronic device in response to the received AP information.

4. The method according to claim 1, wherein the third electronic device is the second electronic device or another electronic device.

5. The method according to claim 1, wherein the method further comprises:
establishing, by the first electronic device, a third Wi-Fi connection to a fourth electronic device.

6. The method according to claim 1, wherein
the first electronic device is customer premise equipment CPE.

7. A communication method, applied to a second electronic device, wherein the method comprises:
establishing, by the second electronic device, a first wireless fidelity Wi-Fi connection to a first electronic device, wherein establishment of the first Wi-Fi connection is triggered by sending, by the second electronic device, a first probe request to the first electronic device; and
obtaining, by the second electronic device, activation information generated by an operator server, and sending the activation information and wireless access point AP information to the first electronic device based on the first Wi-Fi connection, wherein
the activation information comprises an address of a subscription manager-data preparation SM-DP+ server; the AP information is used by the first electronic device to connect to a third electronic device, so that the first electronic device sends profile download request information to the third electronic device; and the profile download request information indicates to download, from the SM-DP+ server, profile data of a built-in eSIM in the first electronic device.

8. The method according to claim 7, wherein the third electronic device is the second electronic device or another electronic device.

9. The method according to claim 8, wherein the third electronic device is the second electronic device, and the method further comprises:
establishing, by the second electronic device, a second Wi-Fi connection to the first electronic device based on the AP information, wherein establishment of the second Wi-Fi connection is triggered by sending, by the first electronic device, a second probe request to the second electronic device;
receiving, by the second electronic device based on the second Wi-Fi connection, the profile download request information sent by the first electronic device;
sending, by the second electronic device, the profile download request information to the SM-DP+ server based on the address of the SM-DP+ server;
receiving, by the second electronic device, the profile data sent by the SM-DP+ server; and
sending, by the second electronic device, the profile data to the first electronic device based on the second Wi-Fi connection.

10. The method according to claim 7, wherein the sending, by the second electronic device, a first probe request to the first electronic device comprises:
sending, by the second electronic device, the first probe request to the first electronic device in response to a received first user operation.

11. The method according to claim 7, wherein the obtaining, by the second electronic device, activation information generated by an operator server comprises:
scanning, by the second electronic device, a graphic code on a subscription agreement in response to a received second user operation, wherein the subscription agreement is generated in a process of subscription between the operator server and the eSIM; and
identifying, by the second electronic device, the graphic code, and extracting the activation information.

12. The method according to claim 7, wherein the obtaining, by the second electronic device, activation information generated by an operator server comprises:
obtaining, by the second electronic device, an image of a subscription agreement in response to a received third user operation, wherein the subscription agreement is generated in a process of subscription between the operator server and the eSIM, and the image of the subscription agreement comprises an image of the activation information; and
performing, by the second electronic device, text recognition on the image of the activation information, and extracting the activation information.

13. The method according to claim 7, wherein the obtaining, by the second electronic device, activation information generated by an operator server comprises:
obtaining, by the second electronic device, the activation information from the operator server.

14. The method according to claim 7, wherein the sending the activation information and AP information to the first electronic device comprises:
sending, by the second electronic device, the activation information and the AP information to the first electronic device in response to a received fourth user operation.

15. The method according to claim 8, wherein the sending the activation information and AP information to the first electronic device comprises:
sending, by the second electronic device in response to a received fifth user operation, the activation information to the first electronic device, and displaying a prompt interface, wherein the prompt interface is used to ask a user whether to send the AP information, and the prompt interface comprises a confirmation option; and
sending, by the second electronic device, the AP information to the first electronic device in response to a received operation of tapping the confirmation option by the user.

16. The method according to claim 8, wherein the sending the activation information and AP information to the first electronic device comprises:
sending, by the second electronic device in response to a received sixth user operation, the activation information to the first electronic device, and displaying an AP selection interface, wherein the AP selection interface is used by a user to select an AP connected to the first electronic device, and the AP selection interface comprises a first AP option and a second AP option;
sending, by the second electronic device to the first electronic device in response to a received operation of tapping the first AP option by the user, AP information used to connect to the second electronic device; and
sending, by the second electronic device to the first electronic device in response to a received operation of tapping the second AP option by the user, AP information used to connect to the another electronic device.

17. The method according to claim 9, wherein before the establishing, by the second electronic device, a second Wi-Fi connection to the first electronic device based on the AP information, the method further comprises:
sending, by the second electronic device, indication information to the first electronic device in response to a received seventh user operation, wherein the indication information indicates the first electronic device to send the second probe request to the second electronic device.

18. The method according to claim 9, wherein the sending the profile download request information to the SM-DP+ server comprises:
sending the profile download request information to the SM-DP+ server through a cellular network.

19. The method according to claim 7, wherein
the second electronic device is a mobile terminal.

20. A communication method, applied to a first electronic device, wherein the method comprises:
establishing, by the first electronic device, a first connection to a second electronic device;
receiving, by the first electronic device based on the first connection, activation information sent by the second electronic device, wherein the activation information comprises an address of a subscription manager-data preparation SM-DP+ server;
sending, by the first electronic device based on the address of the SM-DP+ server, a profile download request to the SM-DP+ server through a cellular network of a subscriber identity module SIM card in the first electronic device, wherein the profile download request indicates to download, from the SM-DP+ server, profile data of a built-in embedded subscriber identity module eSIM in the first electronic device;
receiving, by the first electronic device through the cellular network, the profile data sent by the SM-DP+ server; and
accessing, by the first electronic device based on the profile data, a network by using the built-in eSIM.

21. The method according to claim 20, wherein the first electronic device comprises a modem processor modem, the modem is coupled to the eSIM through a first interface, and the modem is coupled to the SIM card through a second interface.

22. The method according to claim 21, wherein before the accessing, by the first electronic device based on the profile data, a network by using the built-in eSIM, the method further comprises:
sending, by the first electronic device by using the modem, the received profile data to the eSIM through the first interface.

23. The method according to claim 20, wherein the establishing, by the first electronic device, a first connection to a second electronic device comprises:
establishing, by the first electronic device, a Wi-Fi connection to the second electronic device.

24. The method according to claim 20, wherein the establishing, by the first electronic device, a first connection to a second electronic device comprises:
establishing, by the first electronic device, a peer-to-peer P2P connection to the second electronic device.

25. The method according to claim 20, wherein the establishing, by the first electronic device, a first connection to a second electronic device comprises:
establishing, by the first electronic device, a wired connection to the second electronic device.

26. The method according to claim 20, wherein the method further comprises:
establishing, by the first electronic device, a second connection to a third electronic device.

27. The method according to claim 20, wherein
the first electronic device is customer premise equipment CPE.

28. An electronic device, comprising:
a memory and a processor, wherein the memory is coupled to the processor, wherein
the memory stores program instructions, and when the program instructions are executed by the processor, the electronic device is enabled to perform the communication method performed by the first electronic device according to any one of claims 1 to 6 or any one of claims 20 to 27.

29. An electronic device, comprising:
a memory and a processor, wherein the memory is coupled to the processor, wherein
the memory stores program instructions, and when the program instructions are executed by the processor, the electronic device is enabled to perform the communication method performed by the second electronic device according to any one of claims 7 to 19.

30. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the communication method performed by the first electronic device according to any one of claims 1 to 6 or any one of claims 20 to 27.

31. A chip, comprising one or more interface circuits and one or more processors, wherein the interface circuit is configured to: receive a signal from a memory of an electronic device, and send the signal to the processor, the signal comprises computer instructions stored in the memory, and when the processor executes the computer instructions, the electronic device is enabled to perform the communication method performed by the second electronic device according to any one of claims 7 to 19.
